# EUROPEAN PATENT APPLICATION

(11) **EP 4 280 420 A2**
(43) Date of publication of application: **22.11.2023**
(21) Application number: 23174066.3
(22) Date of filing: 17.05.2023
(51) Int. Cl.: H02J 7/00, B25F 5/00

(54) **PORTABLE CHARGING STATION**

(30) Priority: 17.05.2022 US 202263342674 P
(71) Applicant: Milwaukee Electric Tool Corporation, Brookfield, WI 53005 (US)
(72) Inventor: ROBERTS, Veronica, Milwaukee 53224 (US); RADOVICH, Kyle J., West Bend 53095 (US); BECKER, Kyle R., Brookfield 53045 (US); KARBIN, Max, Grafton 53024 (US)
(74) Representative: Forresters IP LLP

(57) **Abstract**

A portable charging station including a housing, a handle coupled to the housing and extending along a height axis of the portable charging station, a charging circuit disposed in the housing, a power tool battery pack interface electrically connected to the charging circuit, and a door including a hinge connected to the housing. The charging circuit includes a rechargeable battery. The power tool battery pack interface defines an insertion axis. The insertion axis extends along the height axis. The door is pivotable between an open position and a closed position. The door is intersected by the insertion axis in the closed position.

## Description

### CROSS-REFERENCE TO RELATED APPLICATION

This application claims priority to U.S. Provisional Patent Application No. 63/342,674, filed May 17, 2022, the entire contents of which are incorporated by reference herein.

### FIELD

The present disclosure relates generally to a charging enclosure including multiple battery packs, devices, and related methods.

### SUMMARY

In one aspect, the present disclosure includes a portable charging station including a housing, a handle coupled to the housing and extending along a height axis of the portable charging station, a charging circuit disposed in the housing, a power tool battery pack interface electrically connected to the charging circuit, and a door including a hinge connected to the housing. The charging circuit includes a rechargeable battery. The power tool battery pack interface defines an insertion axis. The insertion axis extends along the height axis. The door is pivotable between an open position and a closed position. The door is intersected by the insertion axis in the closed position.

In another aspect, the present disclosure includes a portable charging station including a housing, a handle coupled to the housing and extending along a height axis of the portable charging station, a charging circuit disposed in the housing, a power tool battery pack interface electrically connected to the charging circuit, and a door including a hinge pivotably connecting the door to the housing about a pivot axis extending along the height axis. The charging circuit includes a rechargeable battery. The door is opposite the handle.

A portable charging station includes a housing at least partially defining a sealed internal cavity therein, a handle coupled to the housing and extending along a height axis of the portable charging station, a charging circuit disposed in the sealed internal cavity, an interface wall including a power tool battery pack interface, and a plurality of wheels rotatably coupled to the housing. The charging circuit includes a rechargeable battery. The interface wall cooperates with the housing to enclose the sealed internal cavity. The power tool battery pack interface is electrically connected to the charging circuit.

In one aspect, the present disclosure includes a portable charging station comprising:
a housing;
a handle coupled to the housing and extending along a height axis of the portable charging station;
a charging circuit disposed in the housing, the charging circuit including a rechargeable battery;
a power tool battery pack interface electrically connected to the charging circuit, the power tool battery pack interface defining an insertion axis, the insertion axis extending along the height axis; and
a door including a hinge connected to the housing, the door pivotable between an open position and a closed position, the door intersected by the insertion axis in the closed position.

The housing may include a cavity defined therein, the cavity surrounded by an edge of the housing, a plane coincident with the edge extends uninterrupted over the cavity.

The power tool battery pack interface may be one of a plurality of power tool battery pack interfaces arranged in at least two rows, and each of the plurality of power tool battery pack interfaces may be electrically connected to the charging circuit and includes a respective insertion axis, each insertion axis extending along the height axis.

The power tool battery pack interface may include a first port configured to receive a first power tool battery pack and a second port configured to receive a second power tool battery pack, the first port may be configured to deliver power having a different voltage than the second port, and the insertion axis may correspond to at least one of the first port and the second port.

The charging station may further comprise a latch engageable with an edge of the door opposite the hinge to sealingly secure the door in the closed position.

The door may include a plurality of non-powered power tool battery pack interfaces on a side of the door opposite the housing.

In one aspect, the present disclosure includes a portable charging station comprising:
a housing;
a handle coupled to the housing and extending along a height axis of the portable charging station;
a charging circuit disposed in the housing, the charging circuit including a rechargeable battery;
a power tool battery pack interface electrically connected to the charging circuit; and
a door including a hinge pivotably connecting the door to the housing about a pivot axis extending along the height axis, the door opposite the handle.

The power tool battery pack interface may be one of a plurality of power tool battery pack interfaces arranged in at least two columns, and each column may include a plurality of the power tool battery pack interfaces.

The first column may include a first power tool battery pack interface defining a first insertion axis, the second column may include a second power tool battery pack interface defining a second insertion axis, and the first insertion axis may be oblique relative to the second insertion axis.

The power tool battery pack interface may include a first port configured to receive a first power tool battery pack and a second port may be configured to receive a second power tool battery pack, and the first port may be configured to deliver power having a different voltage than the second port.

The charging station may further comprise a plurality of doors opposite the handle, the plurality of doors including the door.

The charging station may further comprise a latch engageable with an edge of the door opposite the hinge to sealingly secure the door to the housing.

A portion of the door may be configured to receive a lock therethrough to lock the door to the housing.

The charging station may further comprise
a plurality of wheels rotatably coupled to the housing, and
wherein the door may include a plurality of non-powered power tool battery pack interfaces on a side of the door opposite the plurality of wheels.

The charging station may further comprise a plurality of vents defined in the housing.

The charging circuit may further include an inverter electrically connected to the rechargeable battery.

In one aspect, the present disclosure includes a portable charging station comprising:
a housing at least partially defining a sealed internal cavity therein;
a handle coupled to the housing and extending along a height axis of the portable charging station;
a charging circuit disposed in the sealed internal cavity, the charging circuit including a rechargeable battery;
an interface wall including a power tool battery pack interface, the interface wall cooperating with the housing to enclose the sealed internal cavity, the power tool battery pack interface electrically connected to the charging circuit; and
a plurality of wheels rotatably coupled to the housing.

The interface wall may define a stepped surface opposite the wheels.

The power tool battery pack interface may include a first port configured to receive a first power tool battery pack and a second port may be configured to receive a second power tool battery pack, and the first port may be configured to deliver power having a different voltage than the second port.

The power tool battery pack interface may be one of a plurality of power tool battery pack interfaces arranged in at least two rows, and wherein each of the plurality of power tool battery pack interfaces may be electrically connected to the charging circuit.

At least one of the rows may cooperate with the stepped surface to define a battery receiving trench.

Other aspects of the disclosure will become apparent by consideration of the detailed description and the accompanying drawings.

### BRIEF DESCRIPTION OF THE DRAWINGS

FIG. 1A is a perspective view of a portable charging station.
FIG. 1B is another perspective view of the portable charging station of FIG. 1A.
FIG. 1C is another perspective view of the portable charging station of FIG. 1A.
FIG. 1D is a perspective view of a cross-section of the portable charging station of FIG. 1A.
FIG. 1E is a perspective view of the portable charging station of FIG. 1A with a door removed.
FIG. 1F is another perspective view of the portable charging station of FIG. 1A with the door removed.
FIG. 1G is a perspective view of the portable charging station of FIG. 1A with the housing and the door removed.
FIG. 1H is a perspective view of a plurality of a battery pack interface configuration of the portable charging station of FIG. 1A.
FIG. 11 is a perspective view of the portable charging station of FIG. 1A in a partially assembled state, with a transparent housing and another embodiment of a battery pack interface configuration.

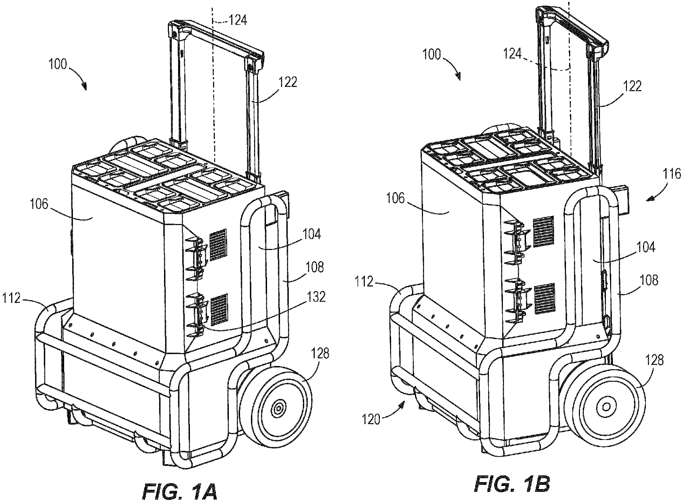

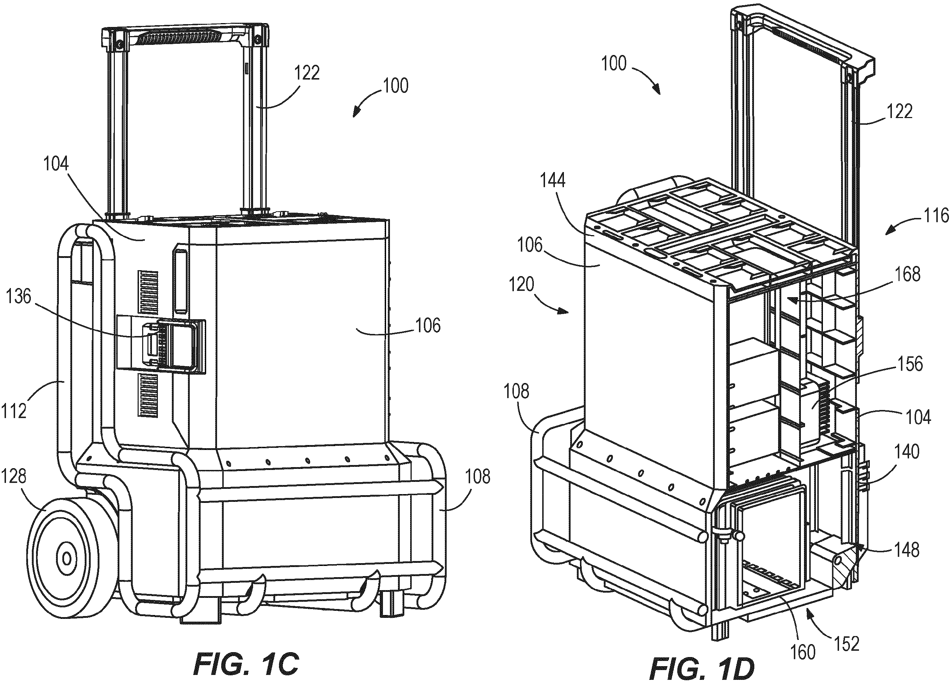

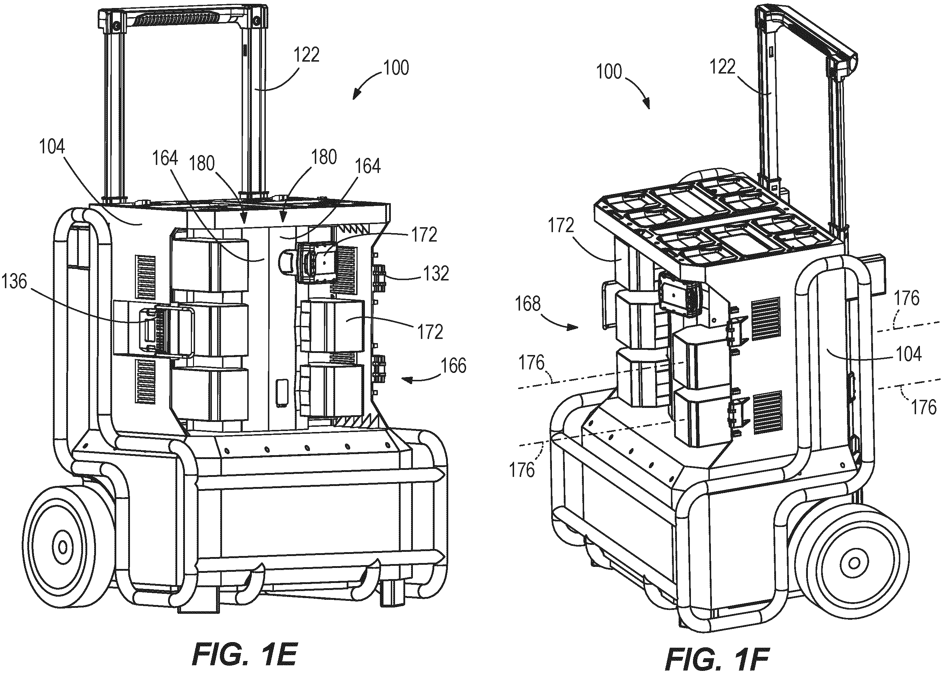

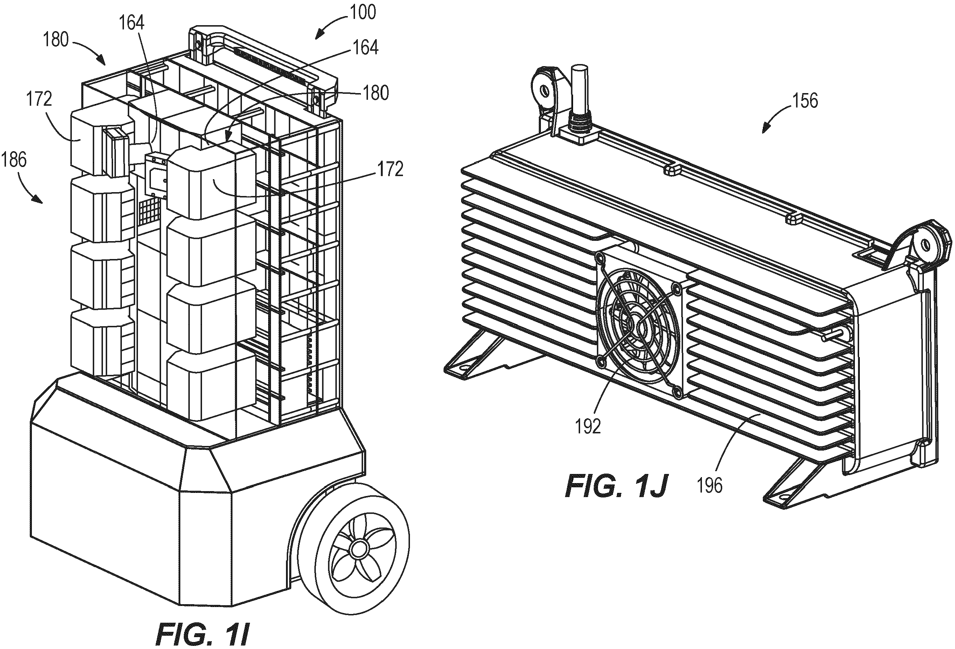

FIG. 1J is a perspective view of a charger of a charging circuit of the portable charging station of FIG. 1A.

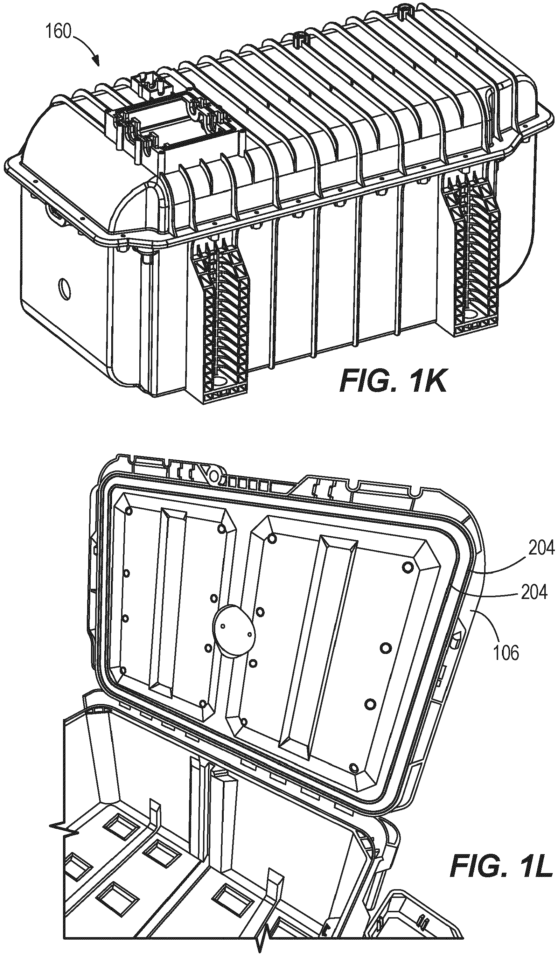

FIG. 1K is a perspective view of a core of the charging circuit of the portable charging station of FIG. 1A.
FIG. 1L is a perspective view of a door of the portable charging station of FIG. 1A.

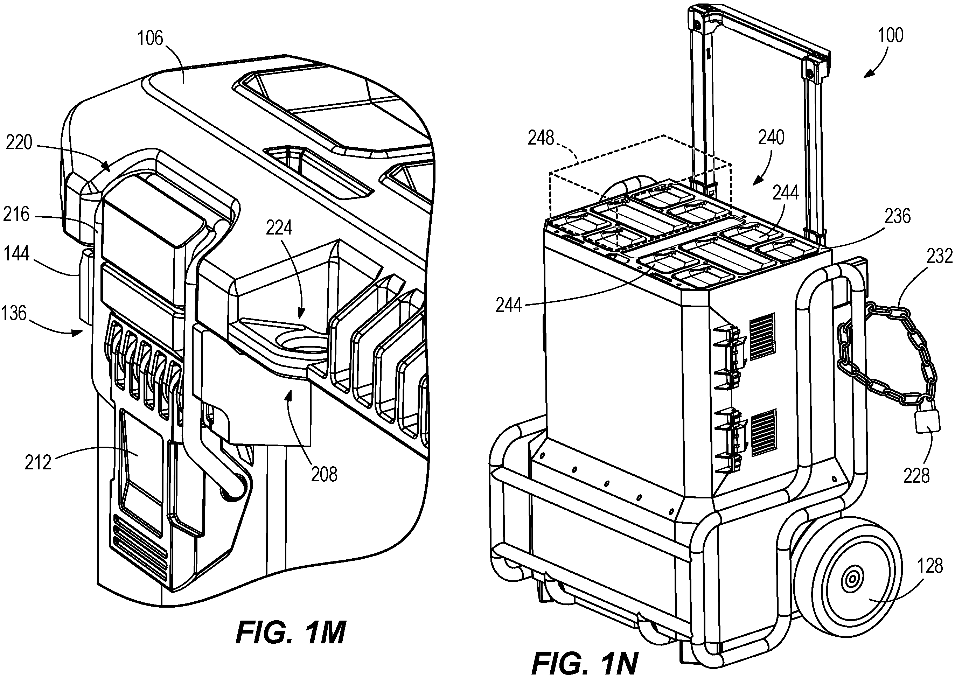

FIG. 1M is a perspective view of a latch on the portable charging station of FIG. 1A.
FIG. 1N is a perspective view of a locking system on the portable charging station of FIG. 1A.

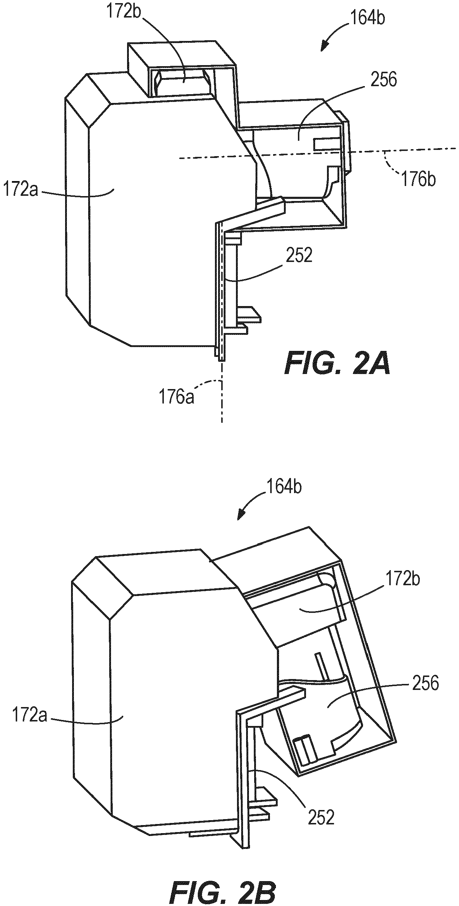

FIG. 2A is a perspective view of an embodiment of a battery pack interface.
FIG. 2B is a perspective view of another embodiment of a battery pack interface.

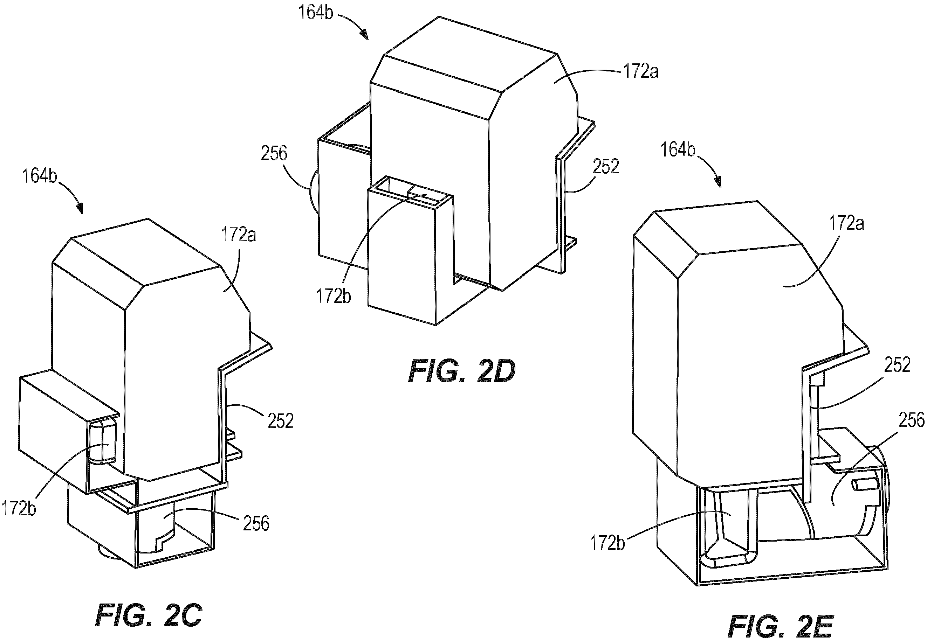

FIG. 2C is perspective view of another embodiment of a battery pack interface.
FIG. 2D is a perspective view of another embodiment of a battery pack interface.
FIG. 2E is a perspective view of another embodiment of a battery pack interface.

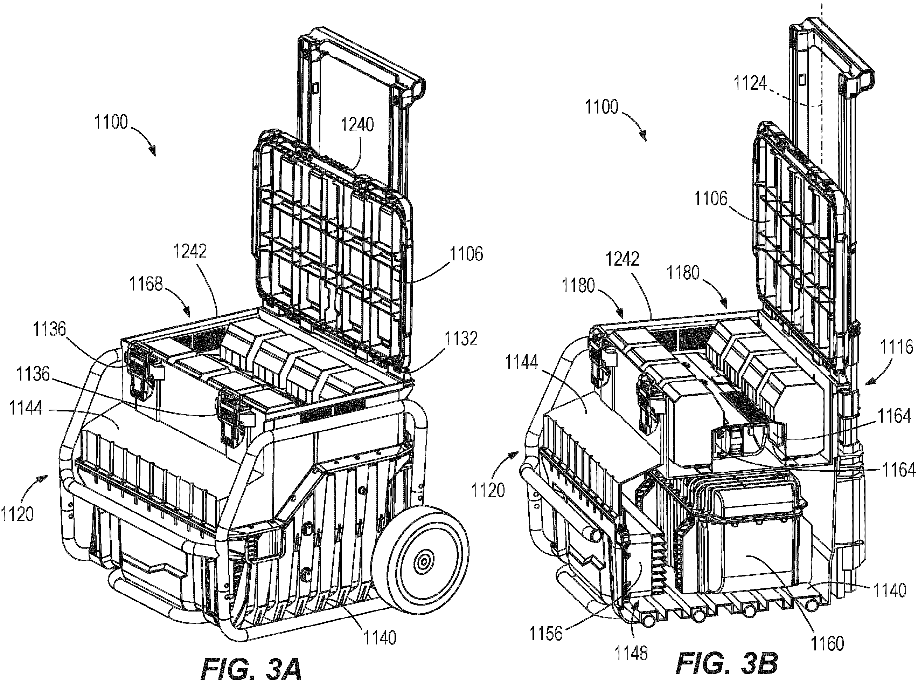

FIG. 3A is a perspective view of a portable charging station according to another embodiment.
FIG. 3B is a perspective view of a cross-section of the portable charging station of FIG. 3A.

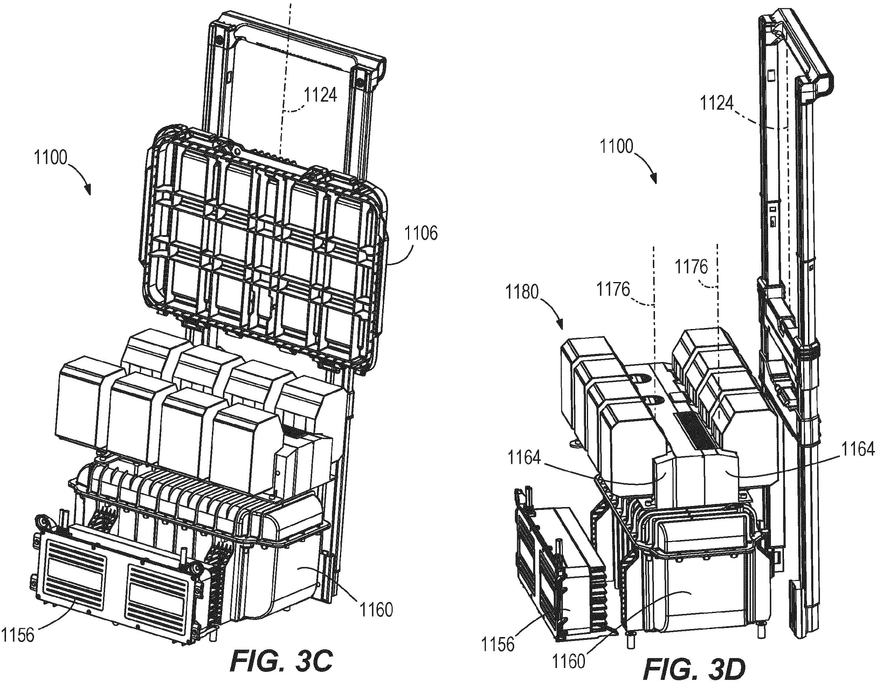

FIG. 3C is a perspective view of the portable charging station of FIG. 3A with a housing removed.
FIG. 3D is another perspective view of the portable charging station of FIG. 3A with the housing removed.

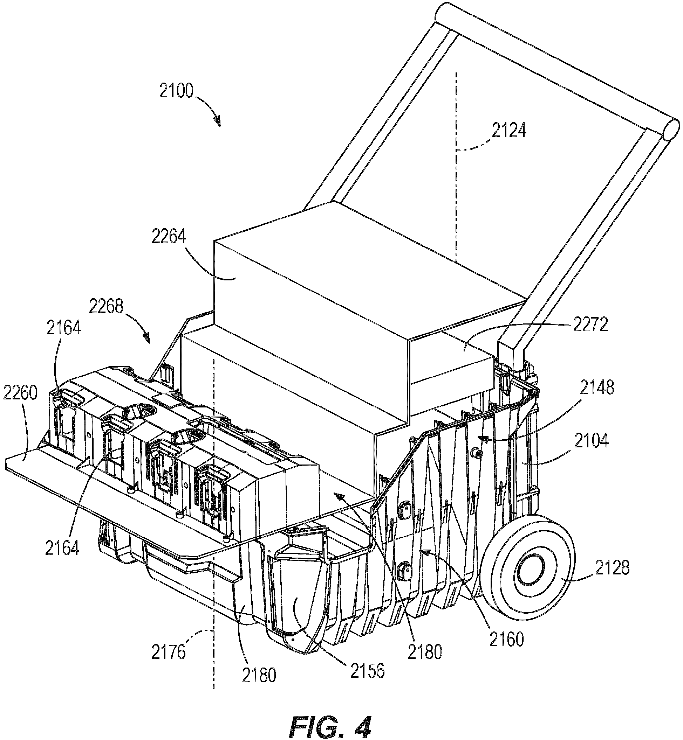

FIG. 4 is a perspective view of a partially assembled portable charging station according to another embodiment.

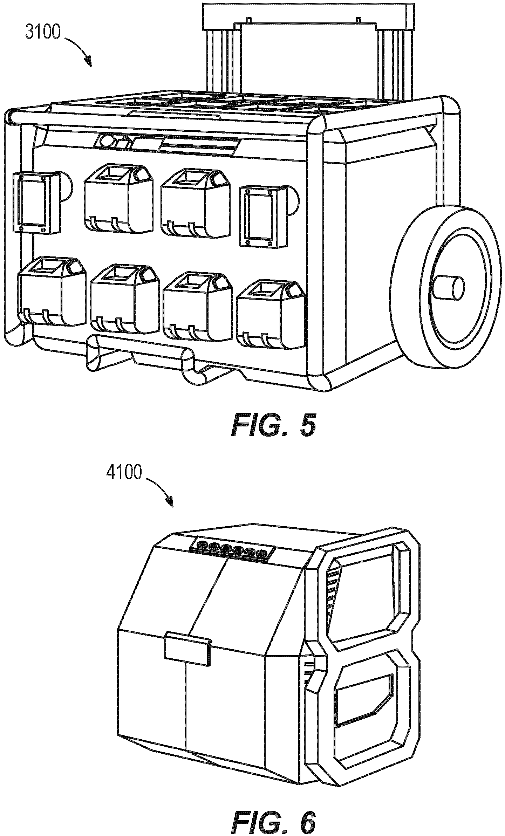

FIG. 5 is a perspective view of a portable charging station according to another embodiment.
FIG. 6 is a perspective view of a portable charging station according to another embodiment.

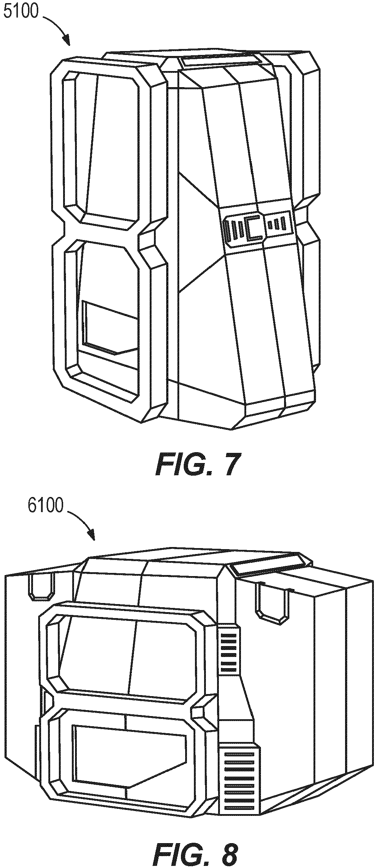

FIG. 7 is a perspective view of a portable charging station according to another embodiment.
FIG. 8 is a perspective view of a portable charging station according to another embodiment.

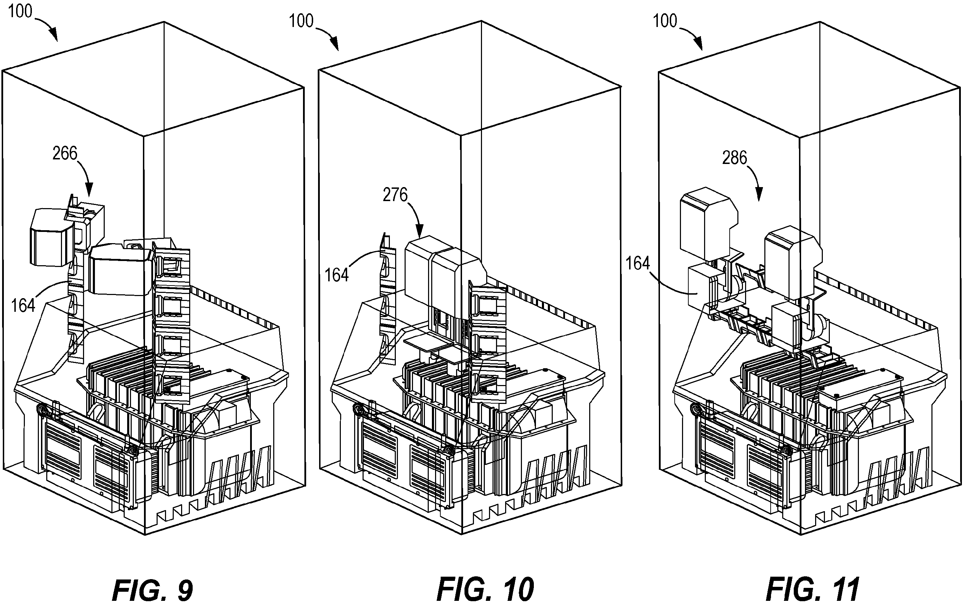

FIG. 9 is a perspective view of another embodiment of a battery pack interface configuration for the portable charging station of FIG. 1A.
FIG. 10 is a perspective view of another embodiment of a battery pack interface configuration for the portable charging station of FIG. 1A.
FIG. 11 is a perspective view of another embodiment of a battery pack interface configuration for the portable charging station of FIG. 1A.

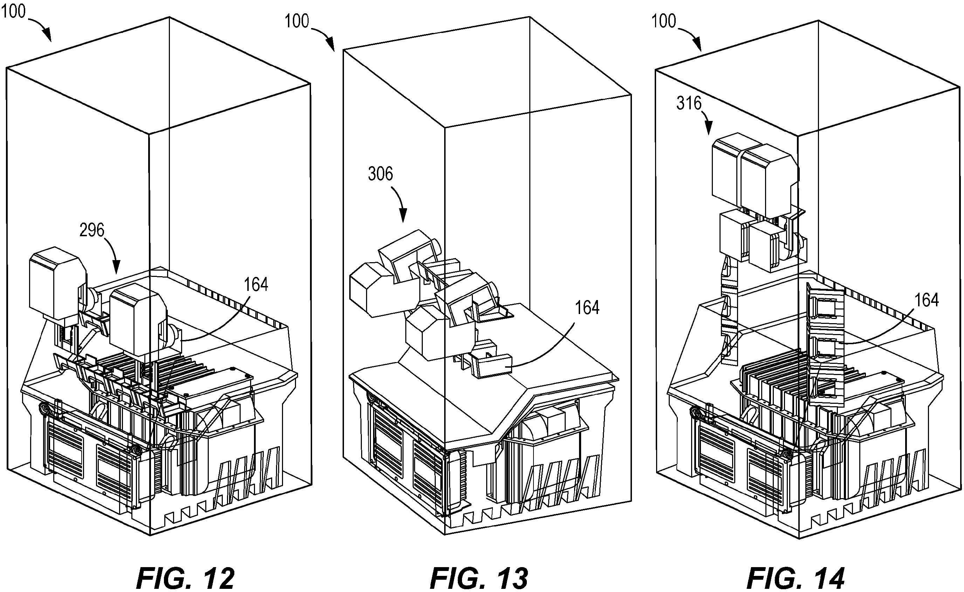

FIG. 12 is a perspective view of another embodiment of a battery pack interface configuration for the portable charging station of FIG. 1A.
FIG. 13 is a perspective view of another embodiment of a battery pack interface configuration for the portable charging station of FIG. 1A.
FIG. 14 is a perspective view of another embodiment of a battery pack interface configuration for the portable charging station of FIG. 1A.

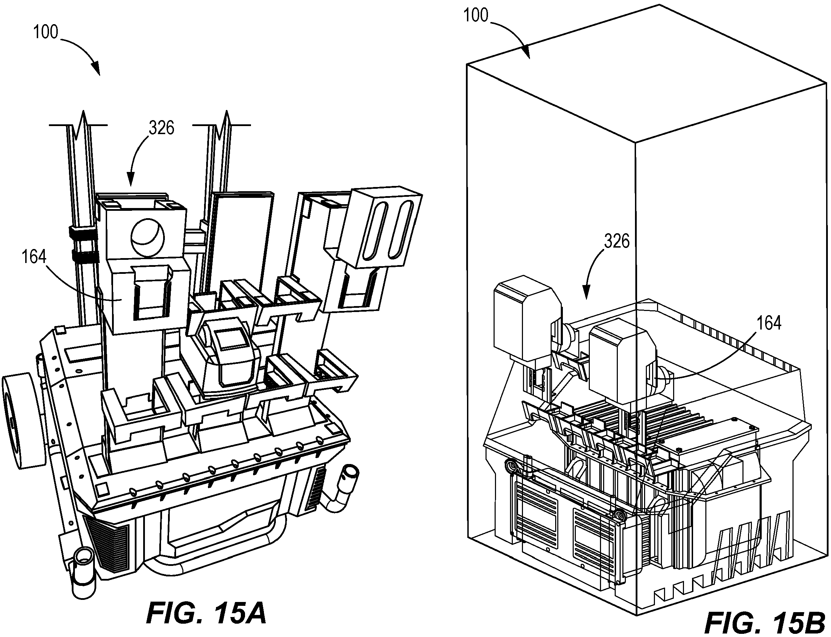

FIG. 15A is a perspective view of another embodiment of a battery pack interface configuration for the portable charging station of FIG. 1A.
FIG. 15B is another perspective view of the battery pack interface configuration of FIG. 15A.

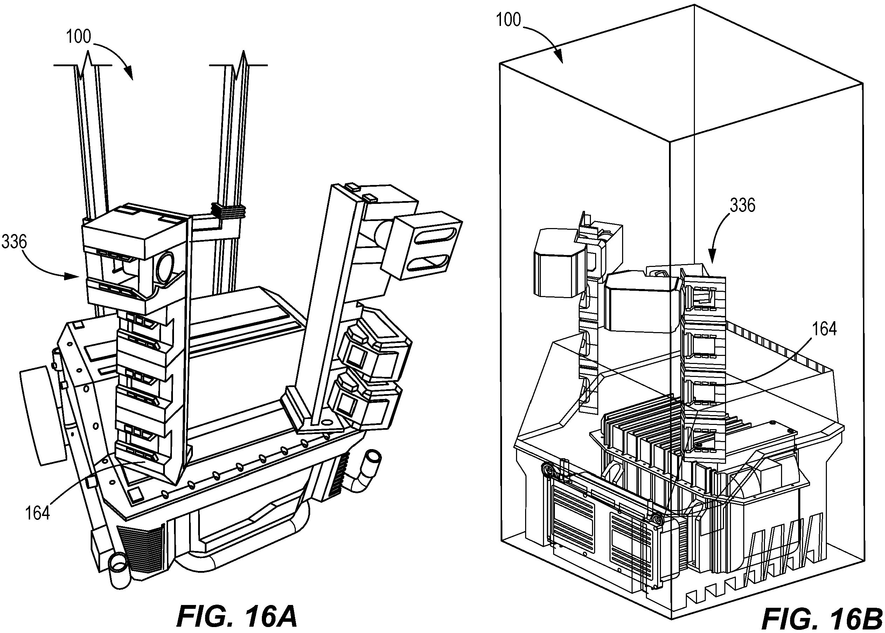

FIG. 16A is a perspective view of another embodiment of a battery pack interface configuration for the portable charging station of FIG. 1A.
FIG. 16B is another perspective view of the battery pack interface configuration of FIG. 16A.

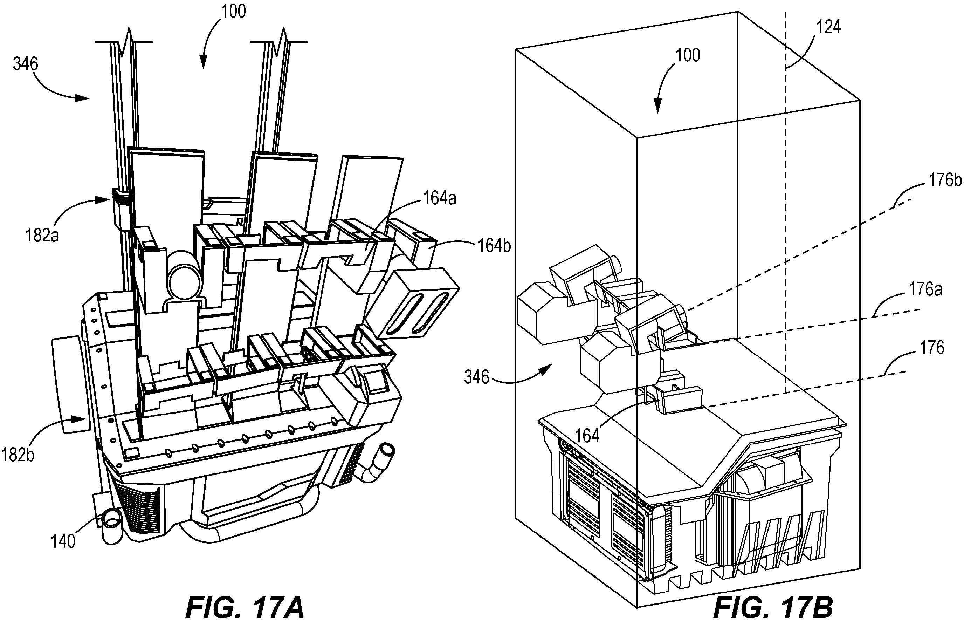

FIG. 17A is a perspective view of another embodiment of a battery pack interface configuration for the portable charging station of FIG. 1A.
FIG. 17B is another perspective view of the battery pack interface configuration of FIG. 17 A.

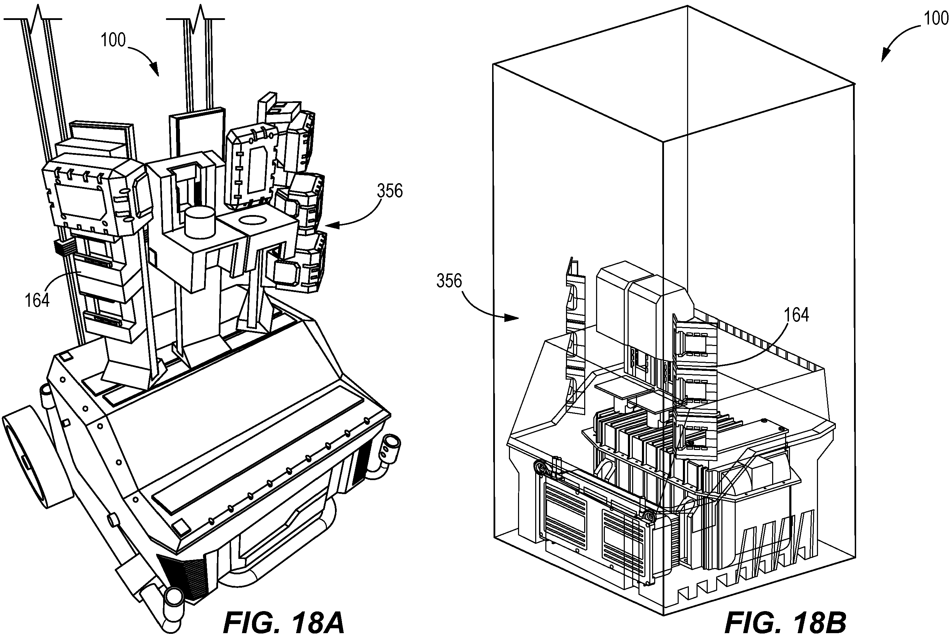

FIG. 18A is a perspective view of another embodiment of a battery pack interface configuration for the portable charging station of FIG. 1A.
FIG. 18B is another perspective view of the battery pack interface configuration of FIG. 18A.

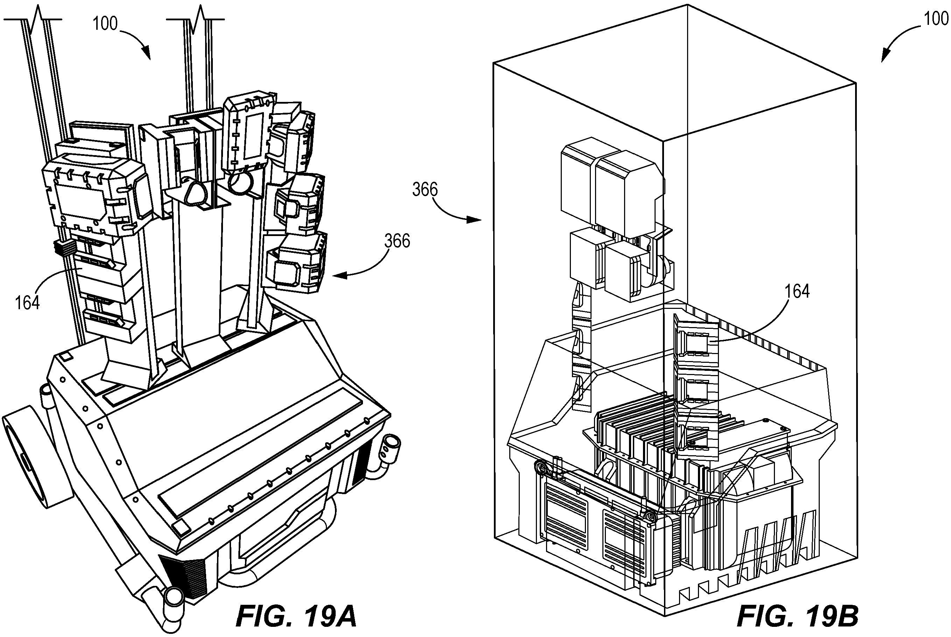

FIG. 19A is a perspective view of another embodiment of a battery pack interface configuration for the portable charging station of FIG. 1A.
FIG. 19B is another perspective view of the battery pack interface configuration of FIG. 19A.

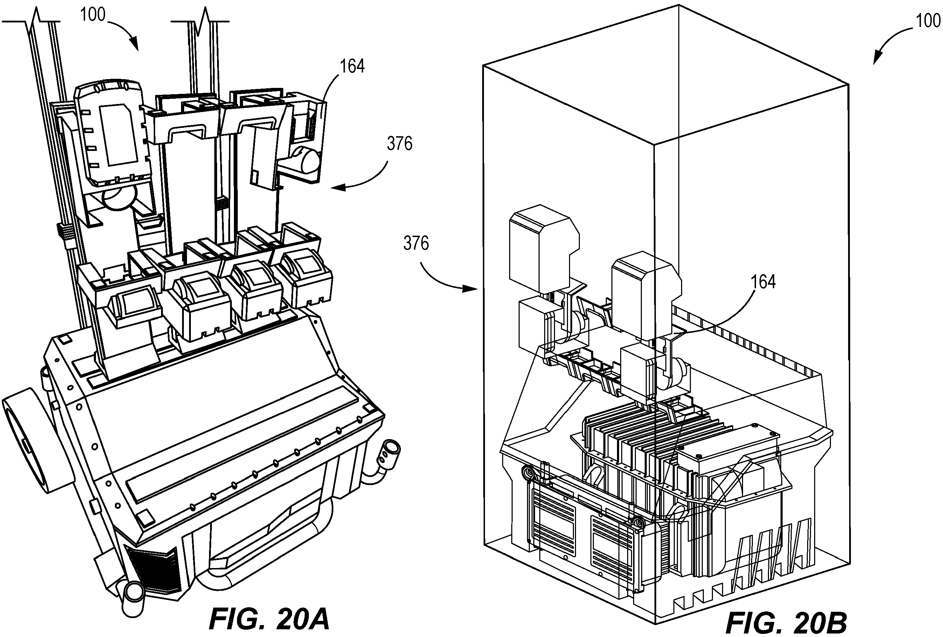

FIG. 20A is a perspective view of another embodiment of a battery pack interface configuration for the portable charging station of FIG. 1A.
FIG. 20B is another perspective view of the battery pack interface configuration of FIG. 20A.

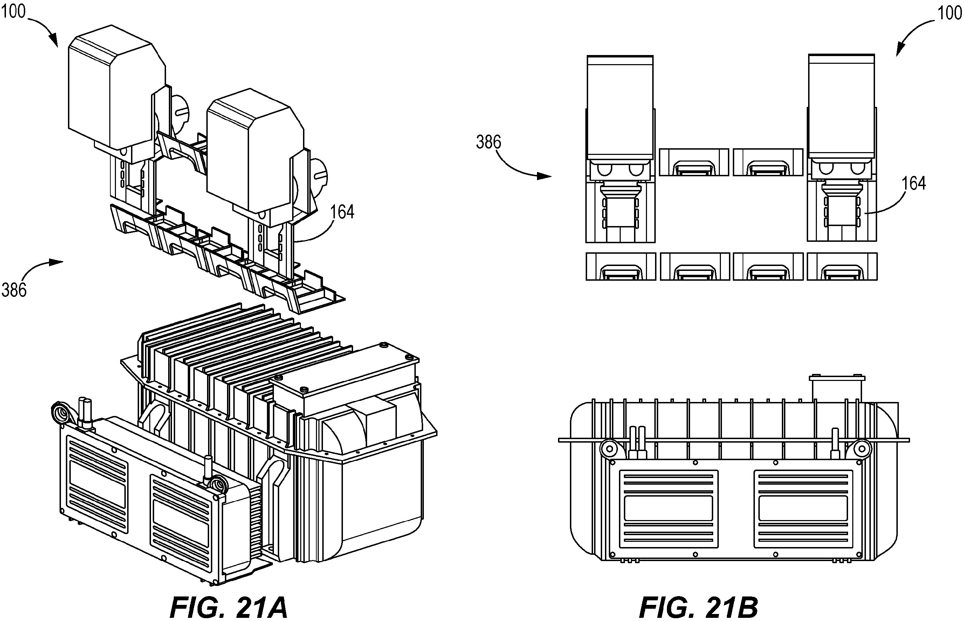

FIG. 21A is a perspective view of another embodiment of a battery pack interface configuration for the portable charging station of FIG. 1A.
FIG. 21B is a front view of the battery pack interface configuration of FIG. 21A.

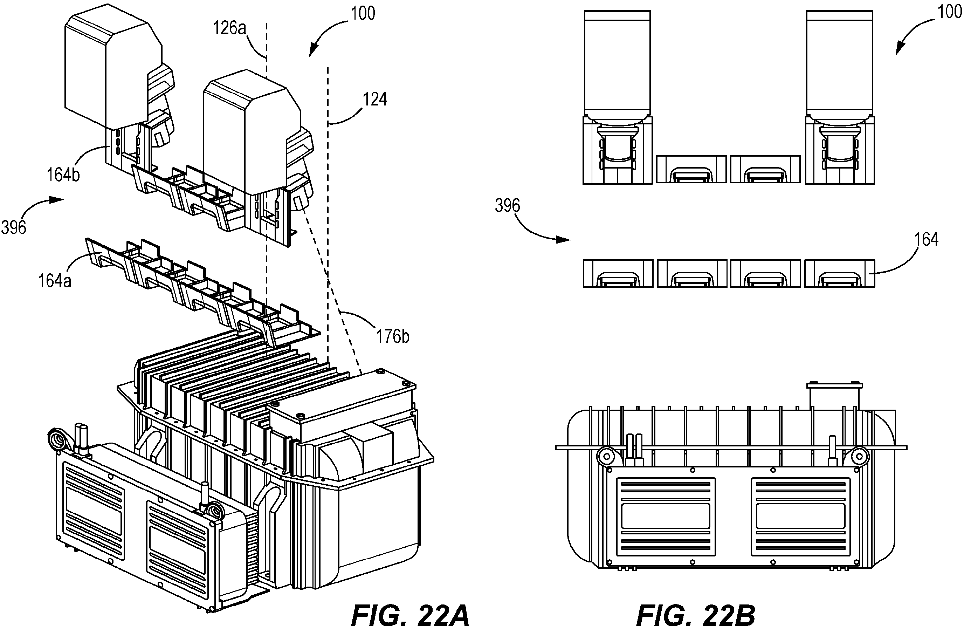

FIG. 22A is a perspective view of another embodiment of a battery pack interface configuration for the portable charging station of FIG. 1A.
FIG. 22B is a front view of the battery pack interface configuration of FIG. 22A.

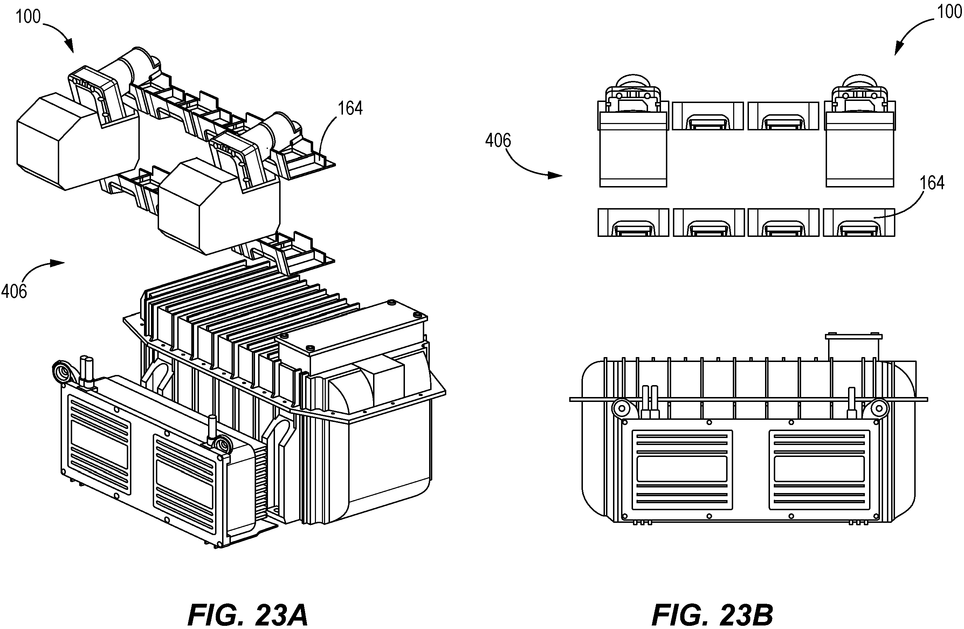

FIG. 23A is a perspective view of another embodiment of a battery pack interface configuration for the portable charging station of FIG. 1A.
FIG. 23B is a front view of the battery pack interface configuration of FIG. 23A.

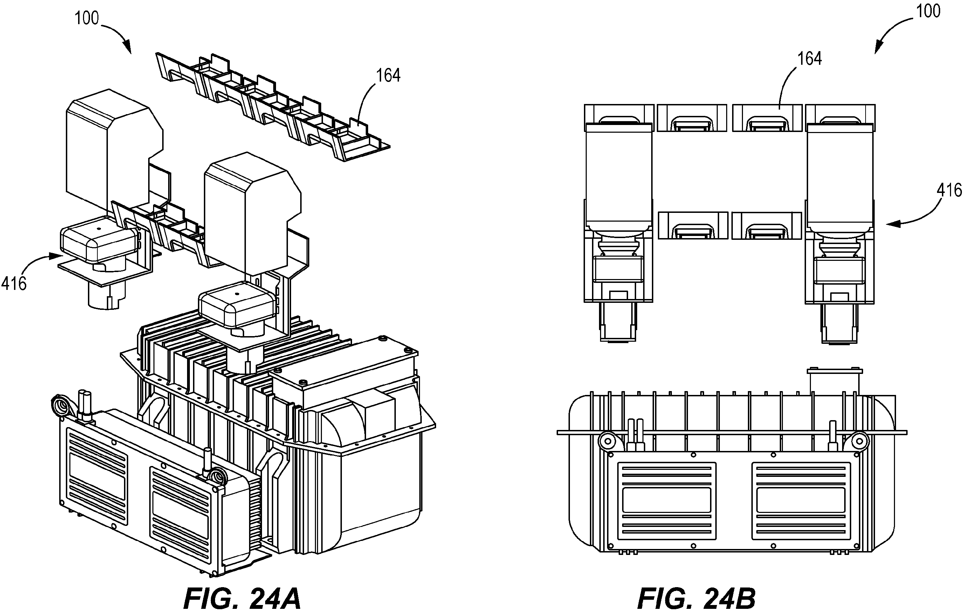

FIG. 24A is a perspective view of another embodiment of a battery pack interface configuration for the portable charging station of FIG. 1A.
FIG. 24B is a front view of the battery pack interface configuration of FIG. 24A.

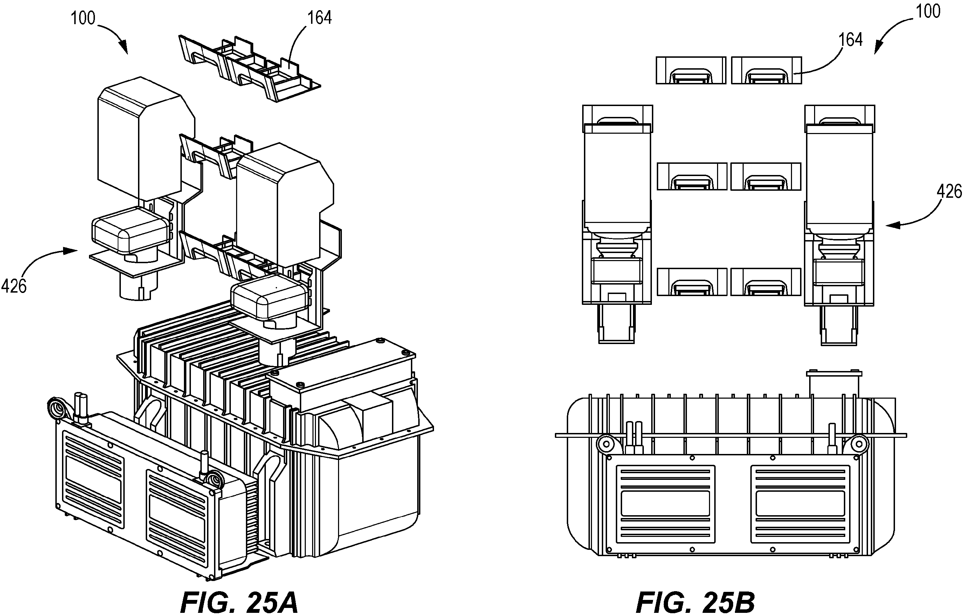

FIG. 25A is a perspective view of another embodiment of a battery pack interface configuration for the portable charging station of FIG. 1A.
FIG. 25B is a front view of the battery pack interface configuration of FIG. 25A.

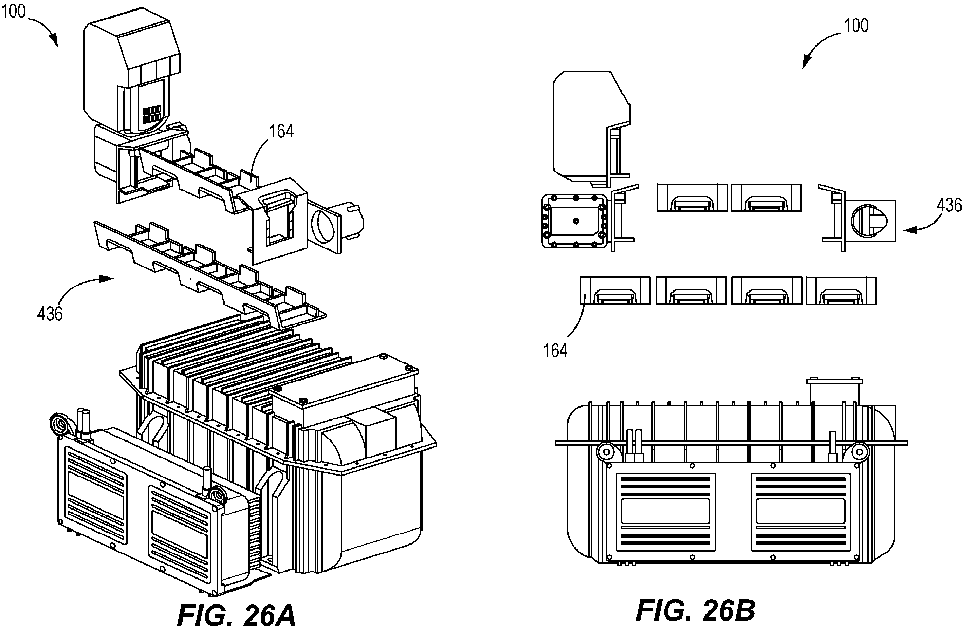

FIG. 26A is a perspective view of another embodiment of a battery pack interface configuration for the portable charging station of FIG. 1A.
FIG. 26B is a front view of the battery pack interface configuration of FIG. 26A.

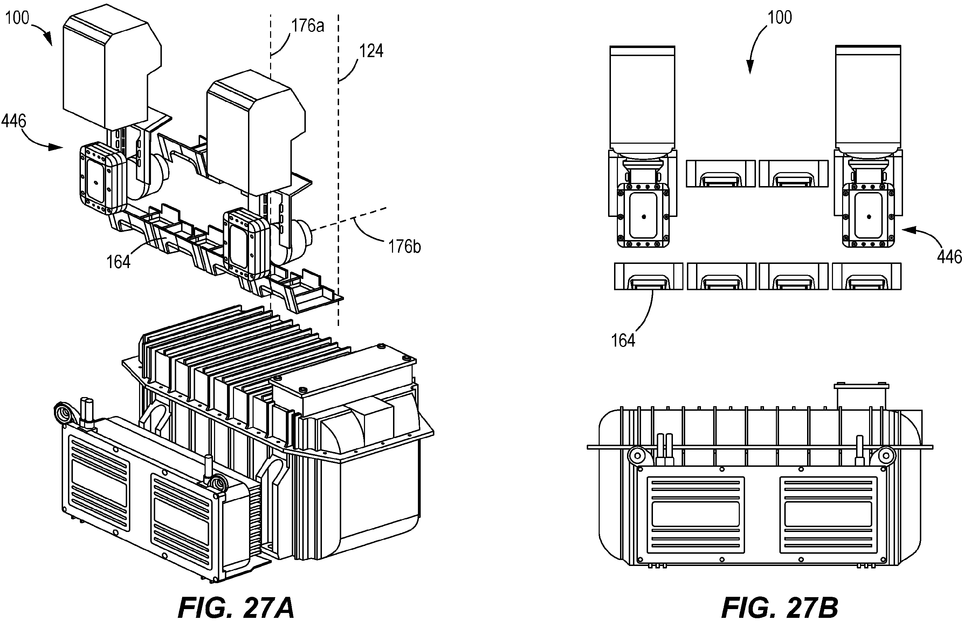

FIG. 27A is a perspective view of another embodiment of a battery pack interface configuration for the portable charging station of FIG. 1A.
FIG. 27B is a front view of the battery pack interface configuration of FIG. 27A.

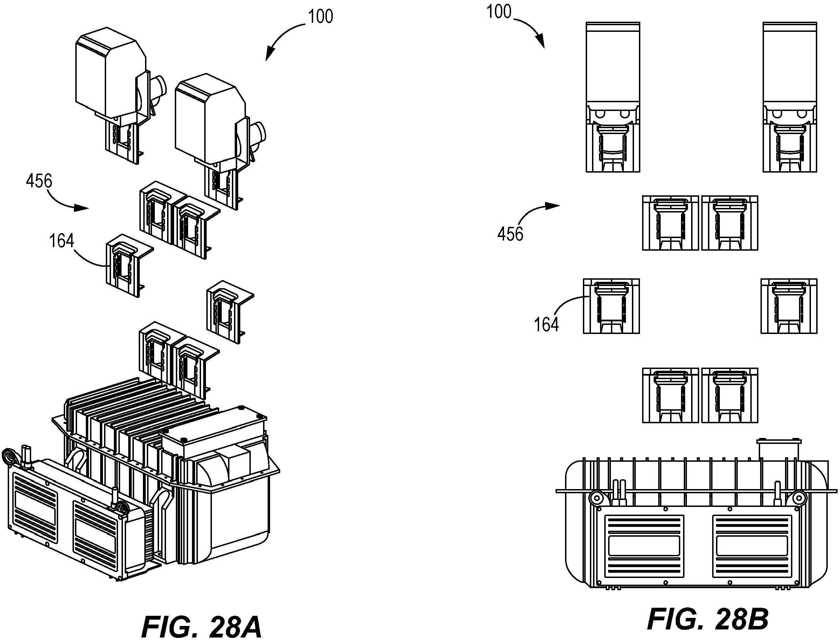

FIG. 28A is a perspective view of another embodiment of a battery pack interface configuration for the portable charging station of FIG. 1A.
FIG. 28B is a front view of the battery pack interface configuration of FIG. 28A.

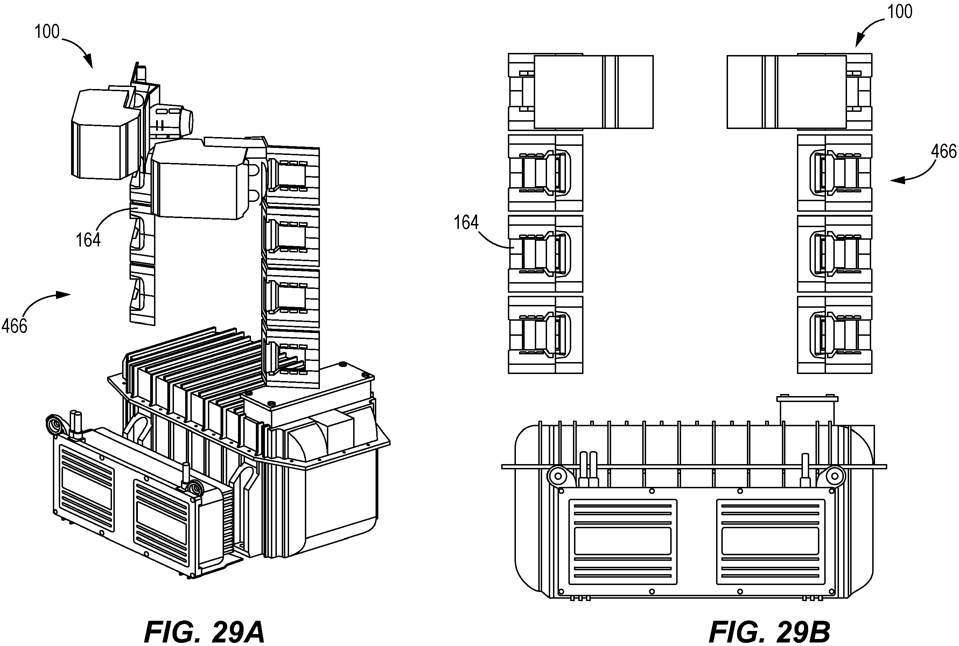

FIG. 29A is a perspective view of another embodiment of a battery pack interface configuration for the portable charging station of FIG. 1A.
FIG. 29B is a front view of the battery pack interface configuration of FIG. 29A.

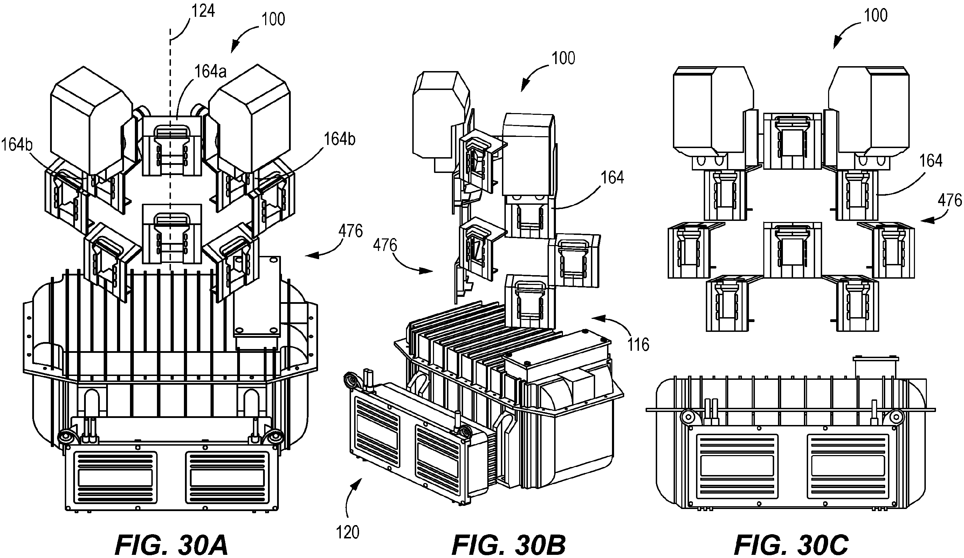

FIG. 30A is a perspective view of another embodiment of a battery pack interface configuration for the portable charging station of FIG. 1A.
FIG. 30B is another perspective view of the battery pack interface configuration of FIG. 30A.
FIG. 30C is a front view of the battery pack interface configuration of FIG. 30A.

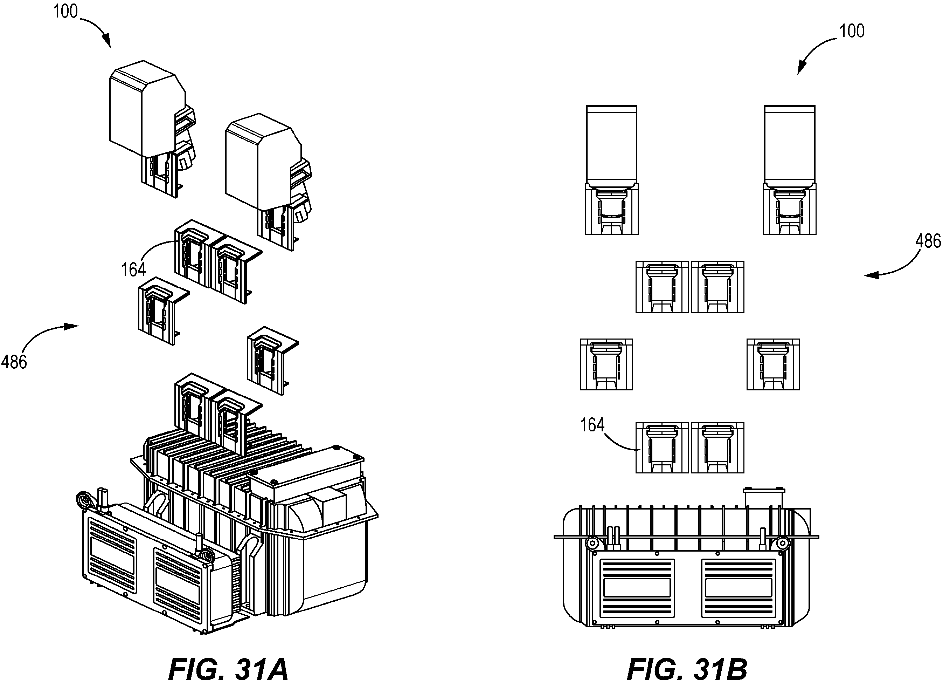

FIG. 31A is a perspective view of another embodiment of a battery pack interface configuration for the portable charging station of FIG. 1A.
FIG. 31B is a front view of the battery pack interface configuration of FIG. 31A.

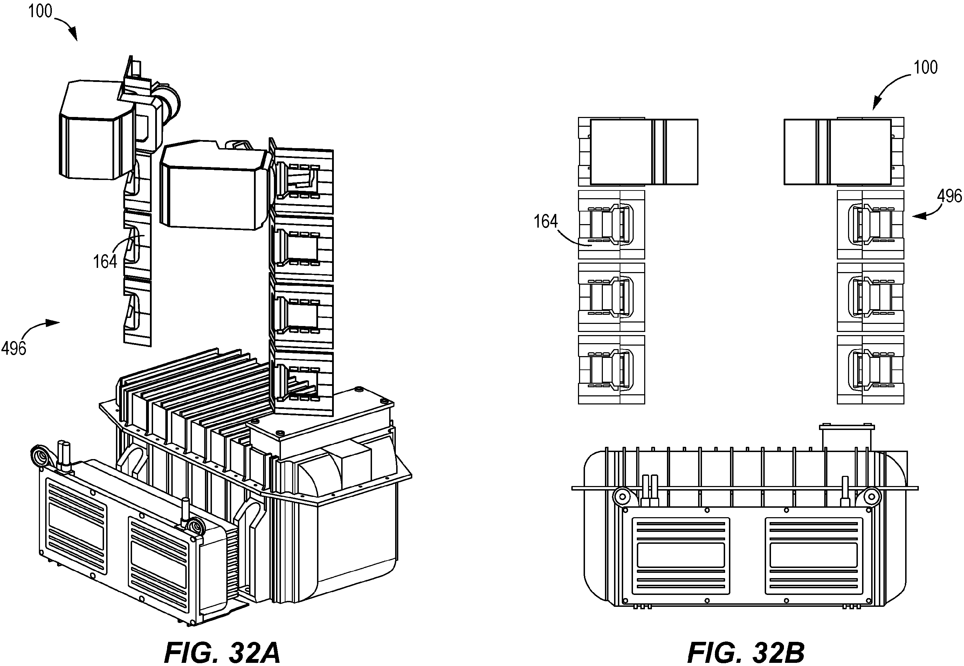

FIG. 32A is a perspective view of another embodiment of a battery pack interface configuration for the portable charging station of FIG. 1A.
FIG. 32B is a front view of the battery pack interface configuration of FIG. 32A.

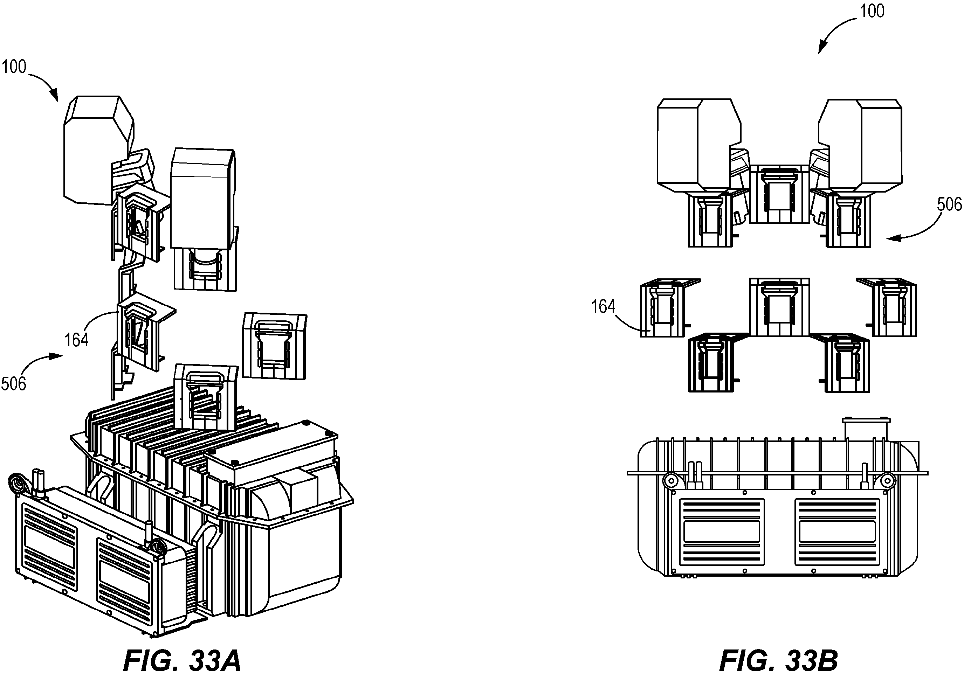

FIG. 33A is a perspective view of another embodiment of a battery pack interface configuration for the portable charging station of FIG. 1A.
FIG. 33B is a front view of the battery pack interface configuration of FIG. 33A.

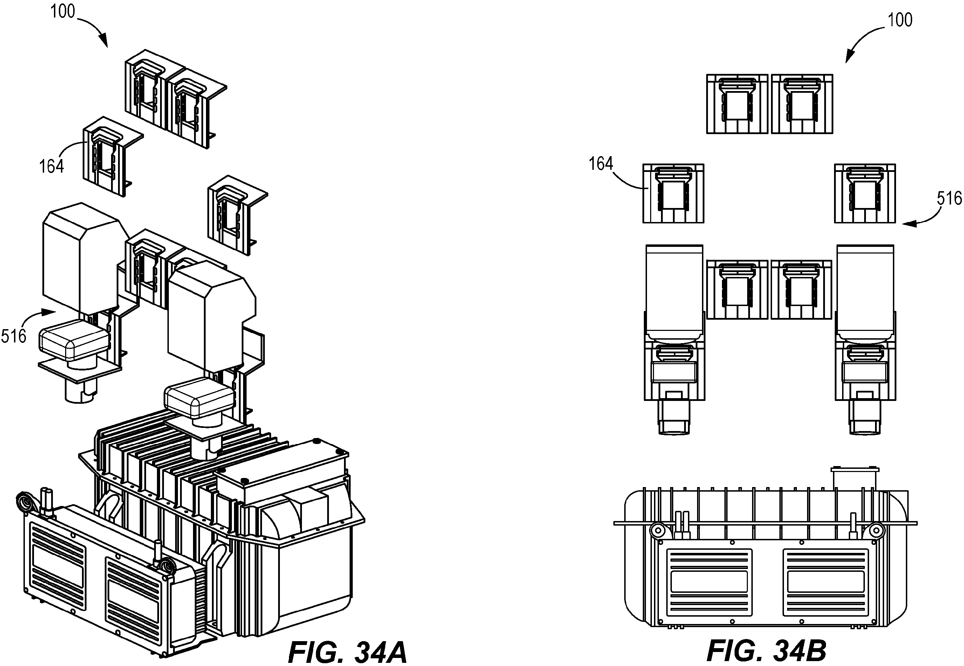

FIG. 34A is a perspective view of another embodiment of a battery pack interface configuration for the portable charging station of FIG. 1A.
FIG. 34B is a front view of the battery pack interface configuration of FIG. 34A.

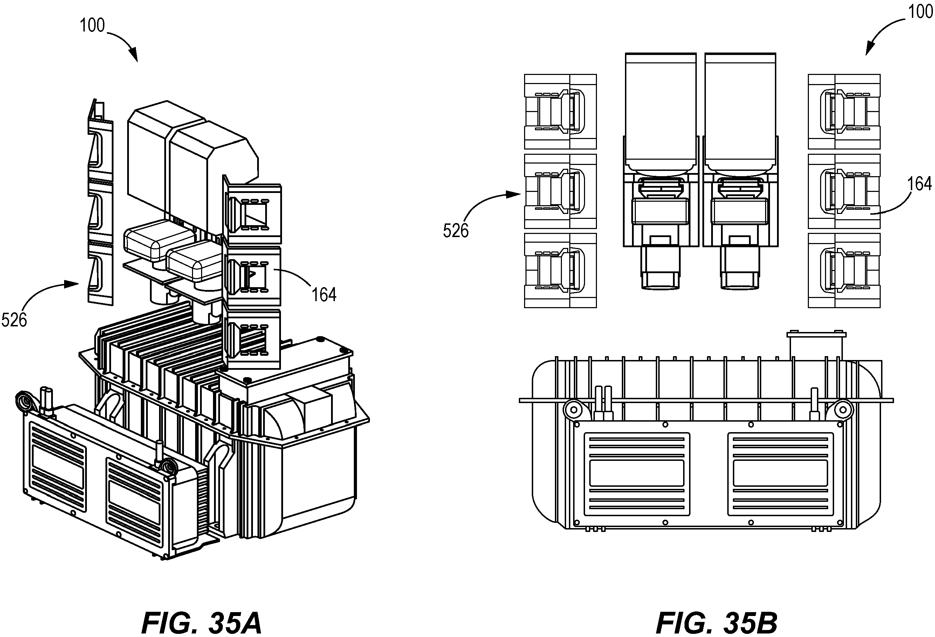

FIG. 35A is a perspective view of another embodiment of a battery pack interface configuration for the portable charging station of FIG. 1A.
FIG. 35B is a front view of the battery pack interface configuration of FIG. 35A.

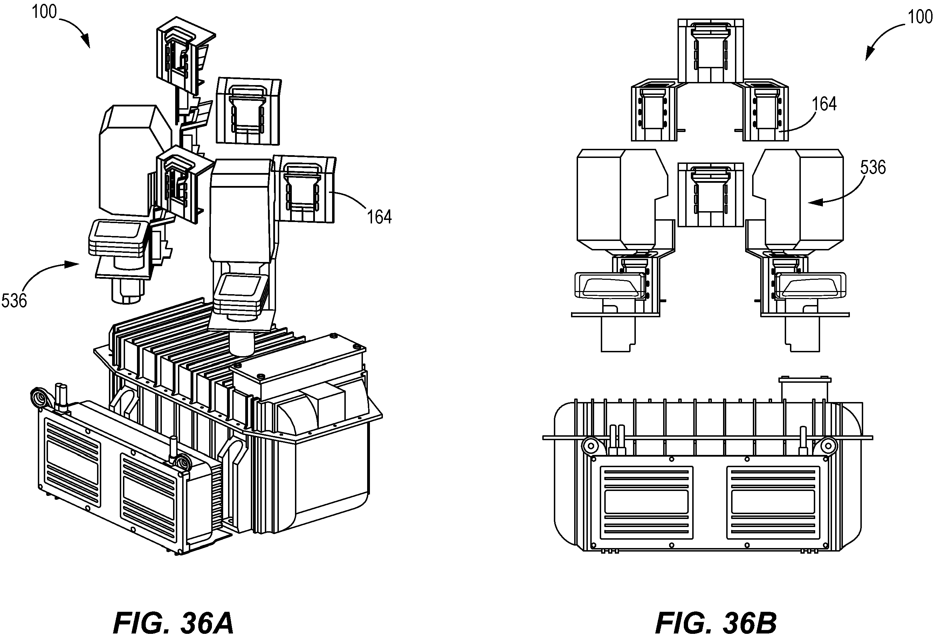

FIG. 36A is a perspective view of another embodiment of a battery pack interface configuration for the portable charging station of FIG. 1A.
FIG. 36B is a front view of the battery pack interface configuration of FIG. 36A.

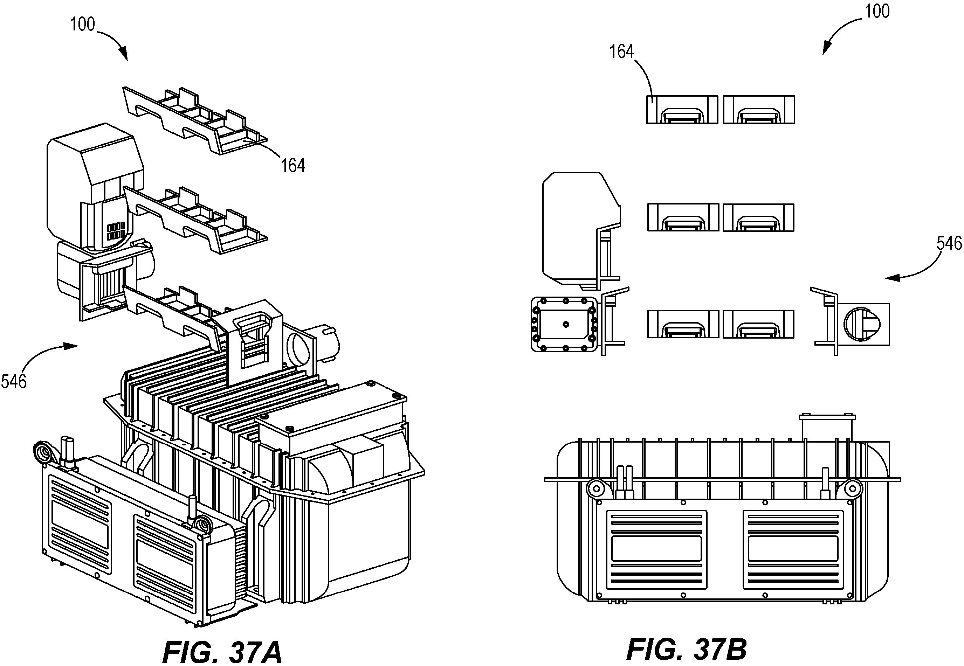

FIG. 37A is a perspective view of another embodiment of a battery pack interface configuration for the portable charging station of FIG. 1A.
FIG. 37B is a front view of the battery pack interface configuration of FIG. 37A.

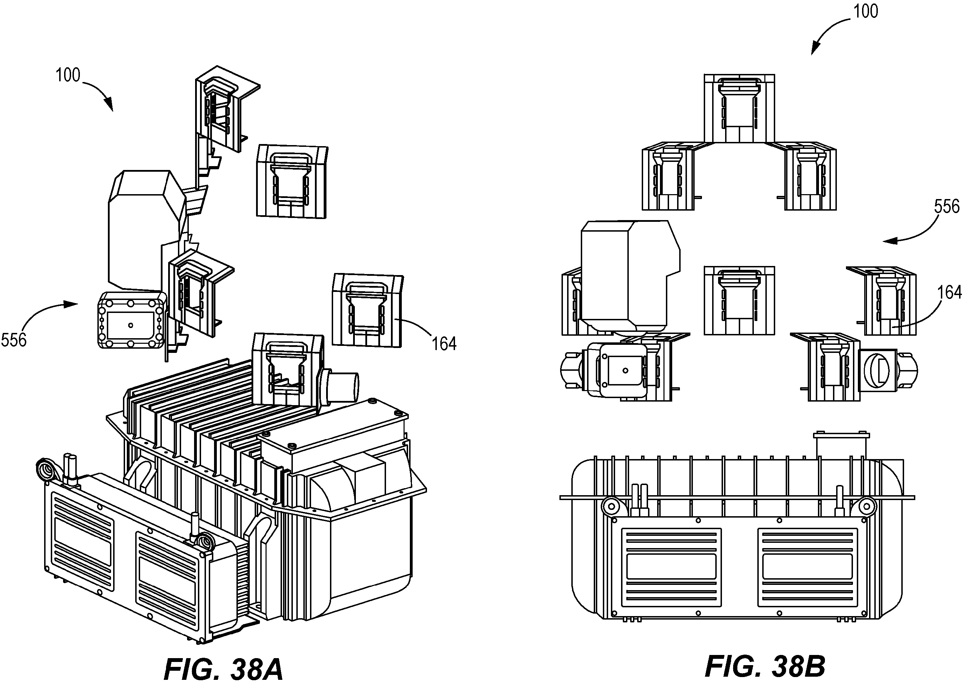

FIG. 38A is a perspective view of another embodiment of a battery pack interface configuration for the portable charging station of FIG. 1A.
FIG. 38B is a front view of the battery pack interface configuration of FIG. 38A.

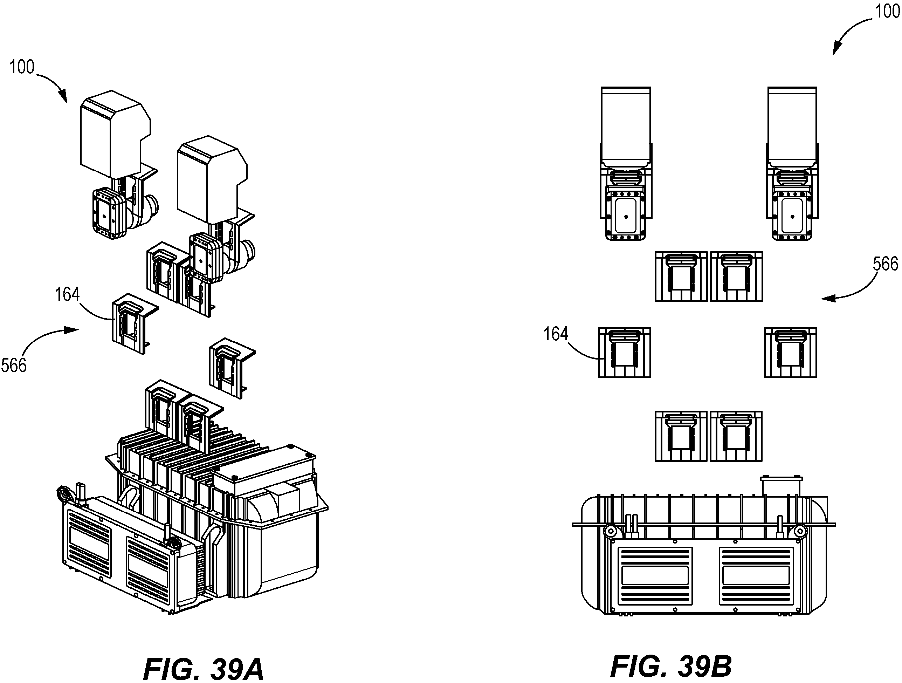

FIG. 39A is a perspective view of another embodiment of a battery pack interface configuration for the portable charging station of FIG. 1A.
FIG. 39B is a front view of the battery pack interface configuration of FIG. 39A.

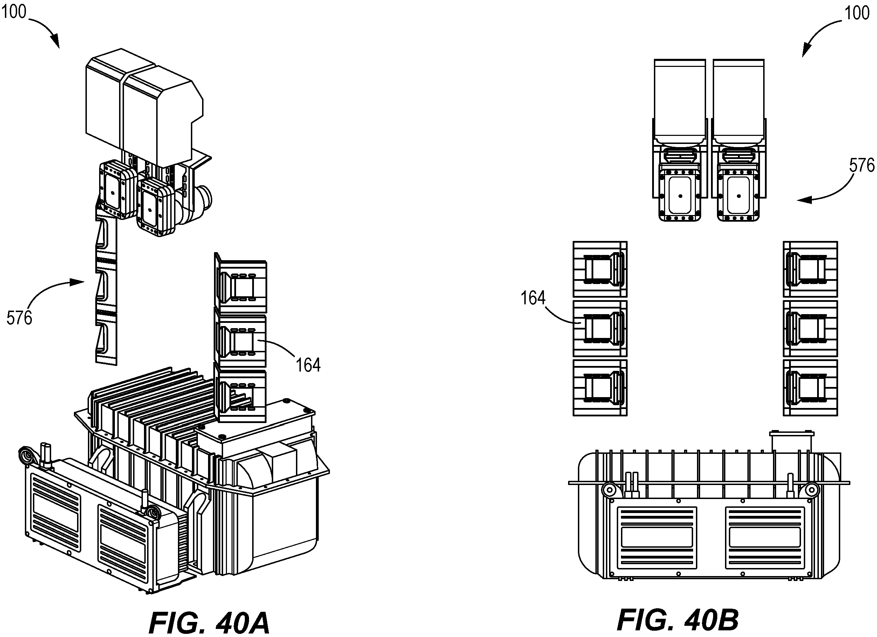

FIG. 40A is a perspective view of another embodiment of a battery pack interface configuration for the portable charging station of FIG. 1A.
FIG. 40B is a front view of the battery pack interface configuration of FIG. 40A.

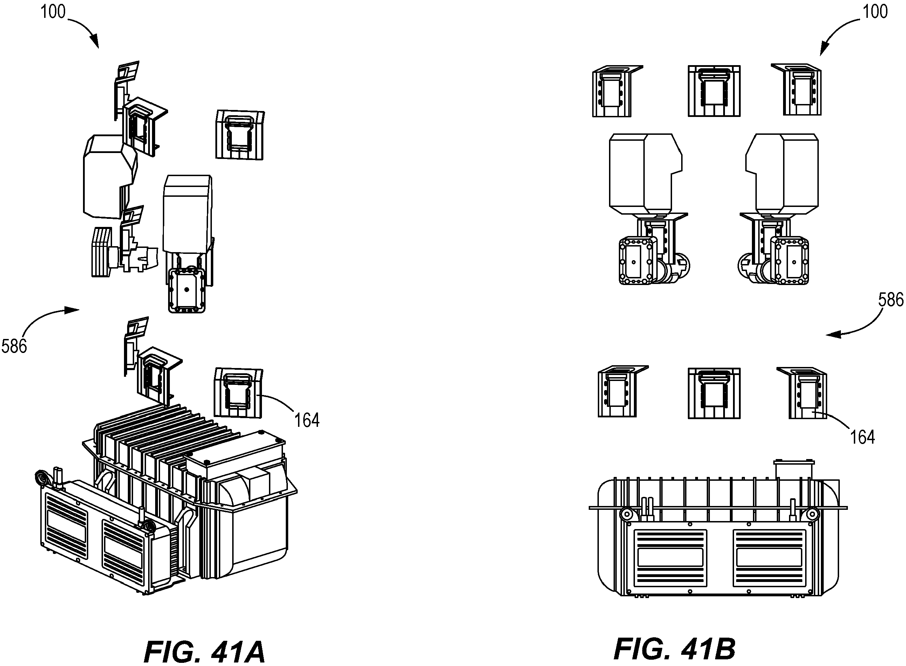

FIG. 41A is a perspective view of another embodiment of a battery pack interface configuration for the portable charging station of FIG. 1A.
FIG. 41B is a front view of the battery pack interface configuration of FIG. 41A.

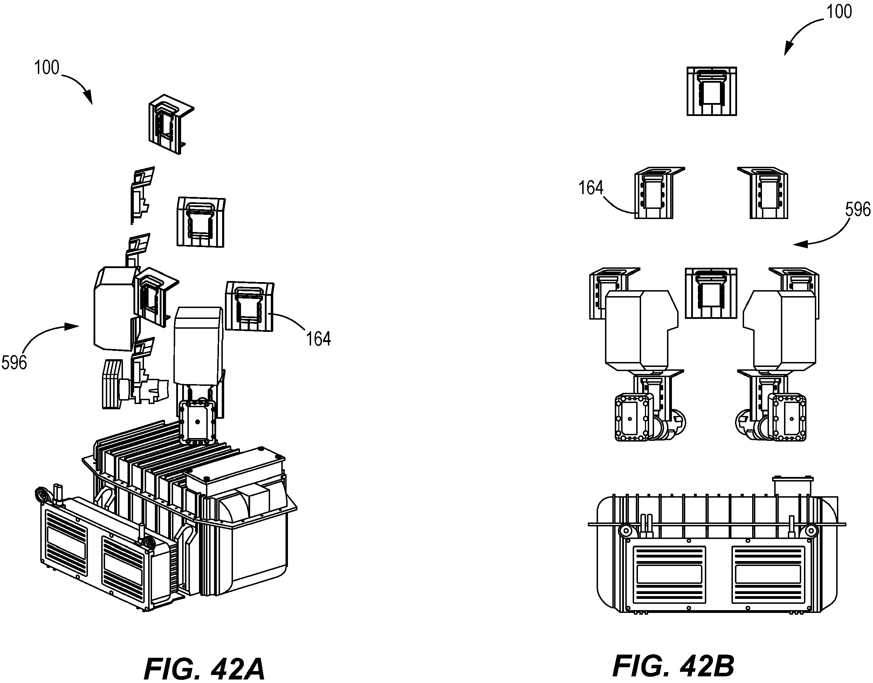

FIG. 42A is a perspective view of another embodiment of a battery pack interface configuration for the portable charging station of FIG. 1A.
FIG. 42B is a front view of the battery pack interface configuration of FIG. 42A.

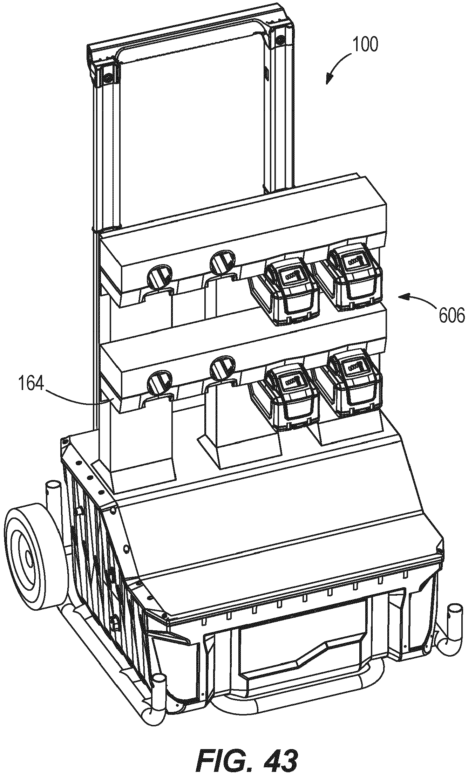

FIG. 43 is a perspective view of another embodiment of a battery pack interface configuration for the portable charging station of FIG. 1A.

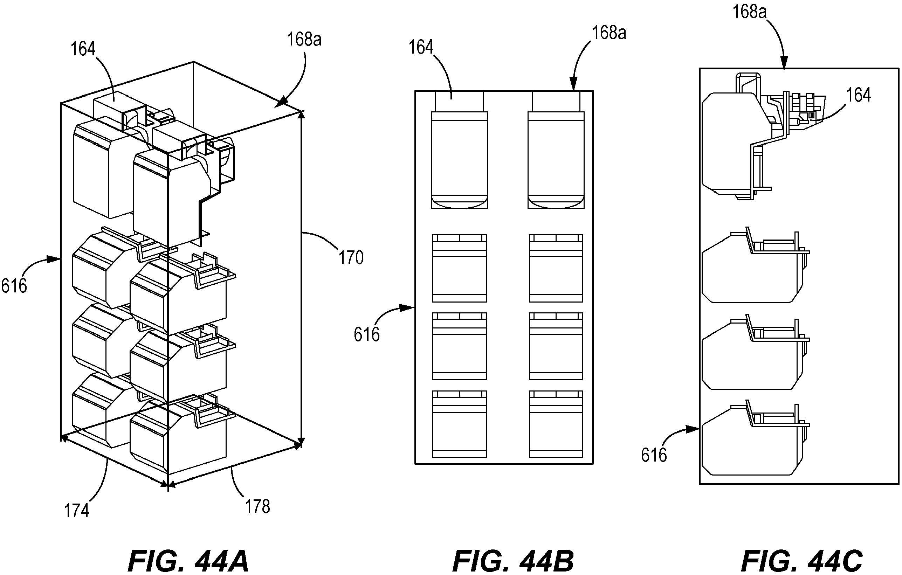

FIG. 44A is a perspective view of an interface cavity and another battery pack interface configuration for the portable charging station of FIG. 1A.
FIG. 44B is a front view of the interface cavity of FIG. 44A.
FIG. 44C is a side view of the interface cavity of FIG. 44A.

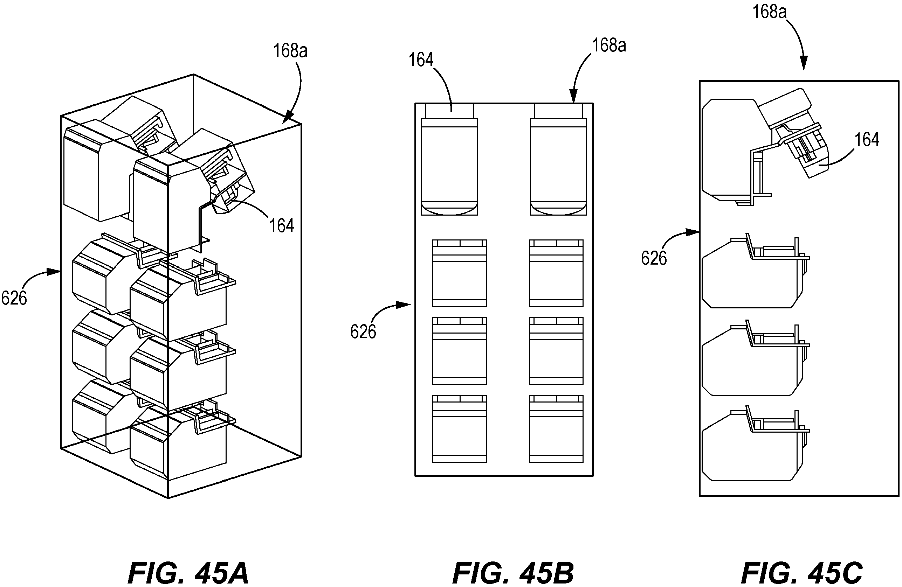

FIG. 45A is a perspective view of another interface cavity and another battery pack interface configuration for the portable charging station of FIG. 1A.
FIG. 45B is a front view of the interface cavity of FIG. 45A.
FIG. 45C is a side view of the interface cavity of FIG. 45A.

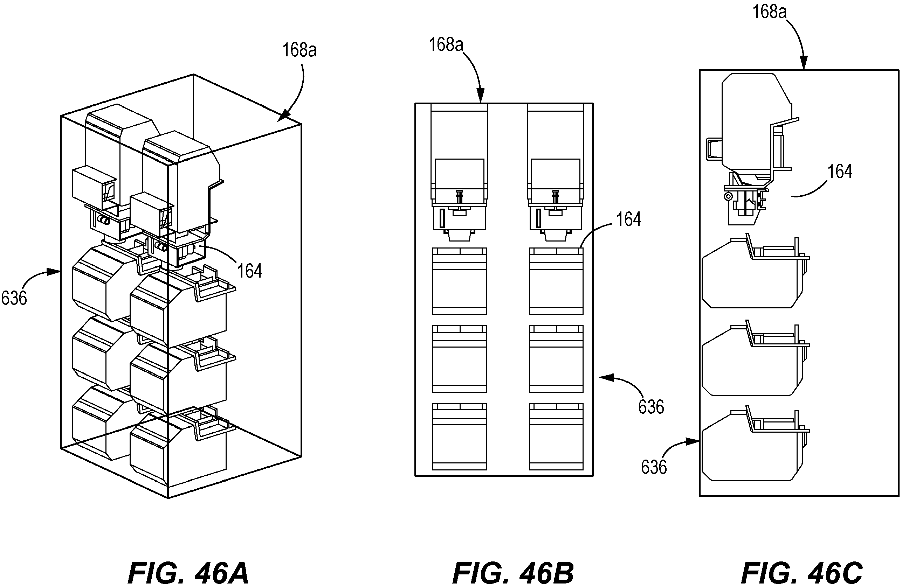

FIG. 46A is a perspective view of another interface cavity and another battery pack interface configuration for the portable charging station of FIG. 1A.
FIG. 46B is a front view of the interface cavity of FIG. 46A.
FIG. 46C is a side view of the interface cavity of FIG. 46A.

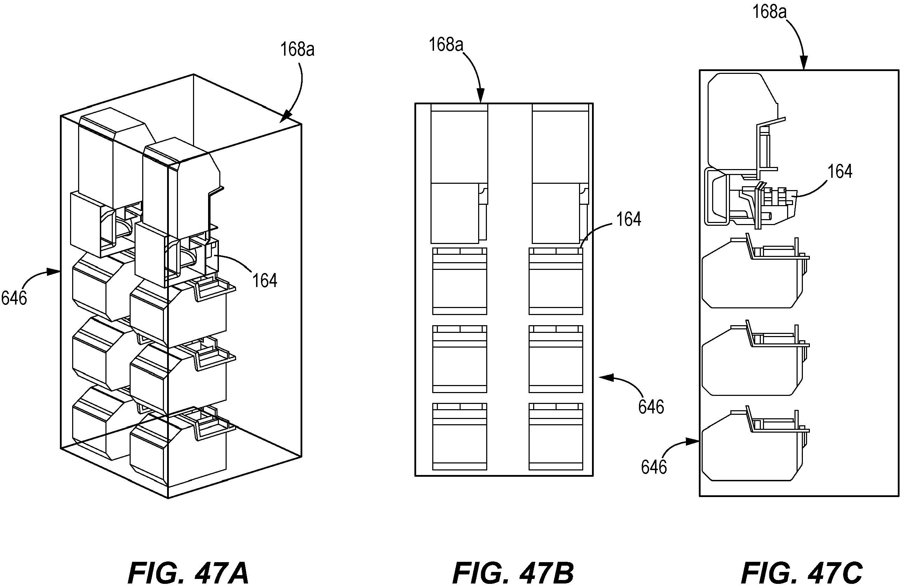

FIG. 47A is a perspective view of another interface cavity and another battery pack interface configuration for the portable charging station of FIG. 1A.
FIG. 47B is a front view of the interface cavity of FIG. 47A.
FIG. 47C is a side view of the interface cavity of FIG. 47A.

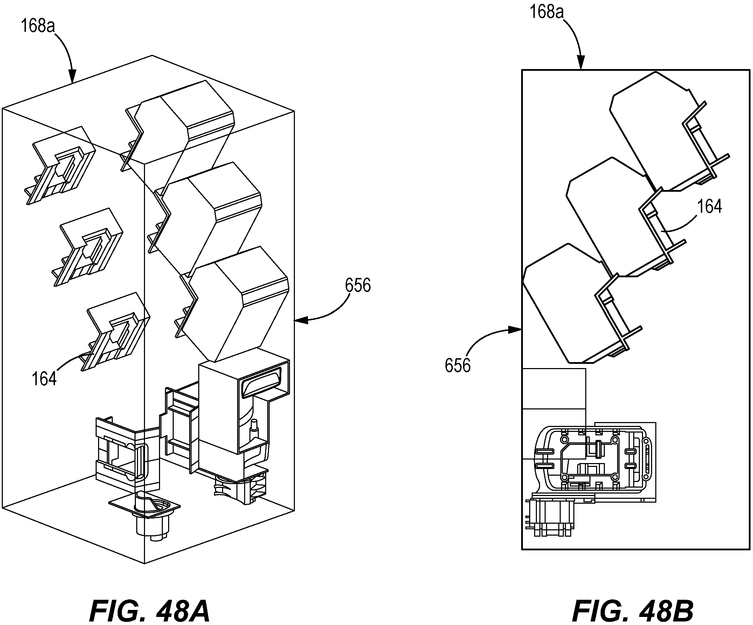

FIG. 48A is a perspective view of another interface cavity and another battery pack interface configuration for the portable charging station of FIG. 1A.
FIG. 48B is a side view of the interface cavity of FIG. 48A.

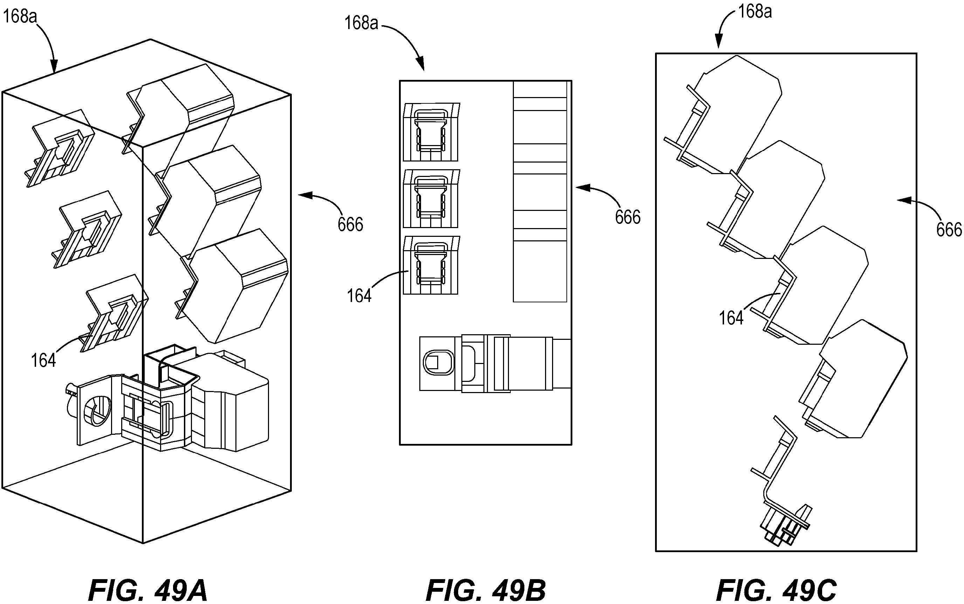

FIG. 49A is a perspective view of another interface cavity and another battery pack interface configuration for the portable charging station of FIG. 1A.
FIG. 49B is a front view of the interface cavity of FIG. 49A.
FIG. 49C is a side view of the interface cavity of FIG. 49A.

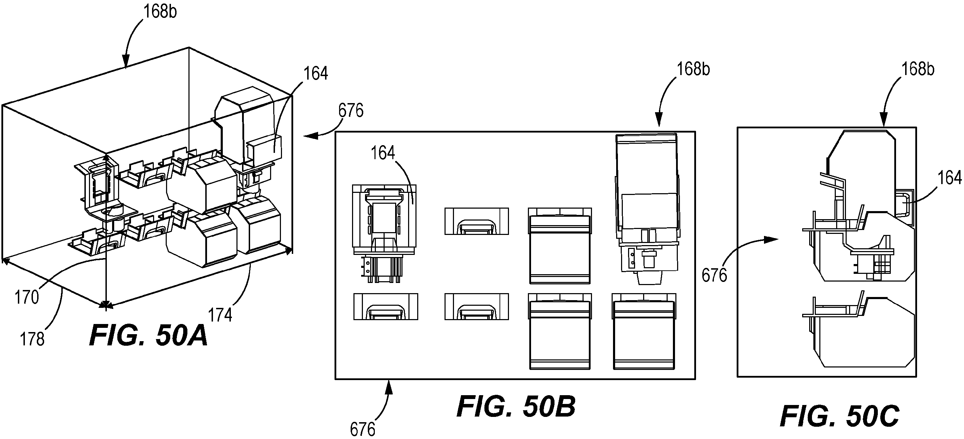

FIG. 50A is a perspective view of another interface cavity and another battery pack interface configuration for the portable charging station of FIG. 1A.
FIG. 50B is a front view of the interface cavity of FIG. 50A.
FIG. 50C is a side view of the interface cavity of FIG. 50A.

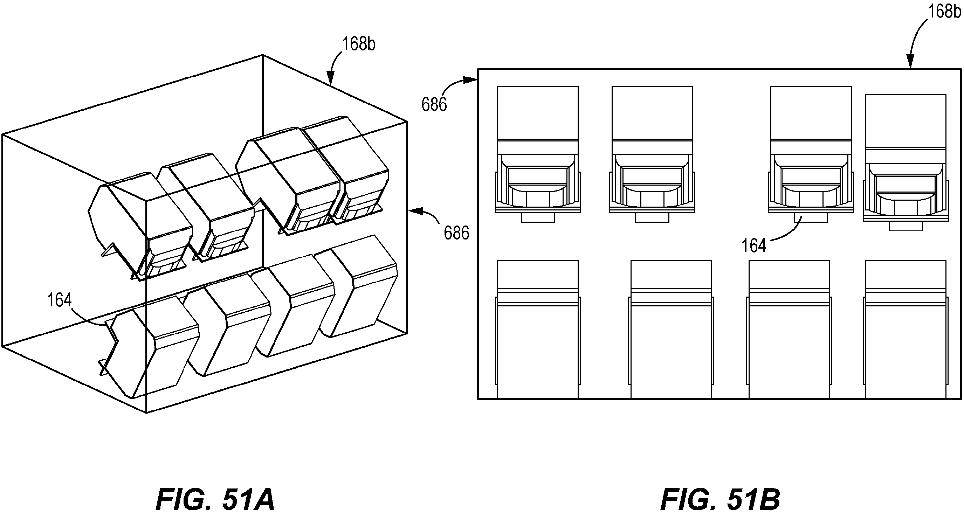

FIG. 51A is a perspective view of another interface cavity and a battery pack interface configuration for the portable charging station of FIG. 1A.
FIG. 51B is a front view of the interface cavity of FIG. 51A.

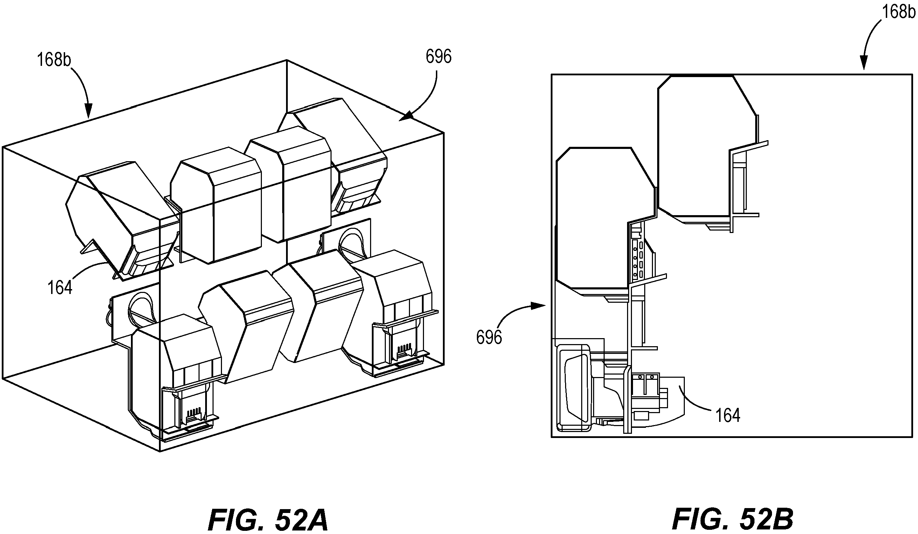

FIG. 52A is a perspective view of another interface cavity and a battery pack interface configuration for the portable charging station of FIG. 1A.
FIG. 52B is a side view of the interface cavity of FIG. 52A.

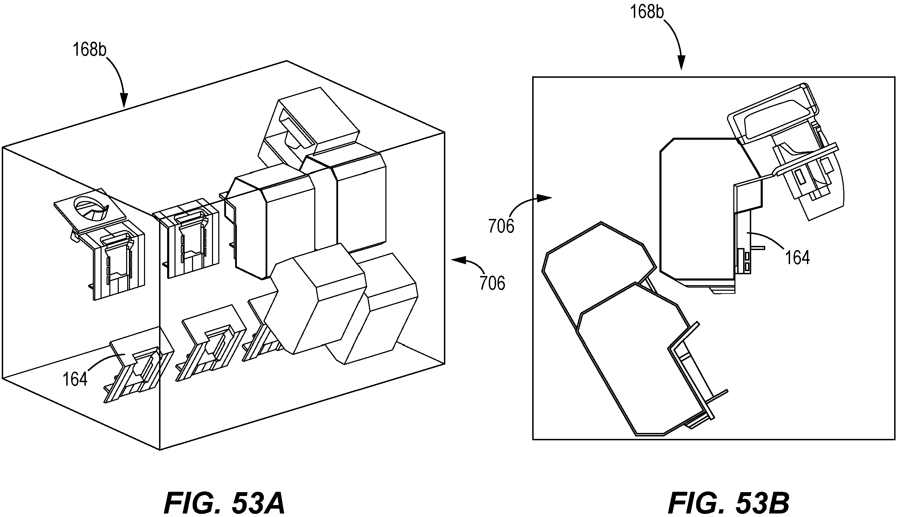

FIG. 53A is a perspective view of another interface cavity and a battery pack interface configuration for the portable charging station of FIG. 1A.
FIG. 53B is a side view of the interface cavity of FIG. 53A.

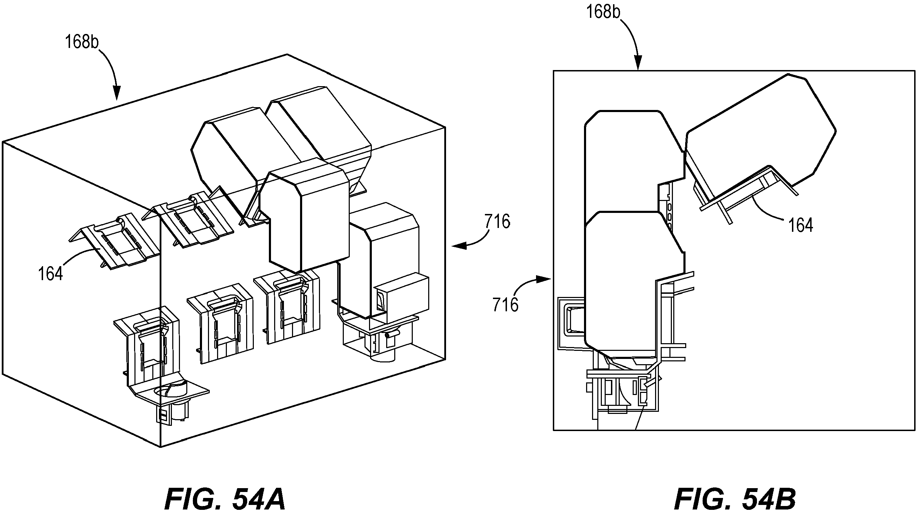

FIG. 54A is a perspective view of another interface cavity and a battery pack interface configuration for the portable charging station of FIG. 1A.
FIG. 54B is a side view of the interface cavity of FIG. 54A.

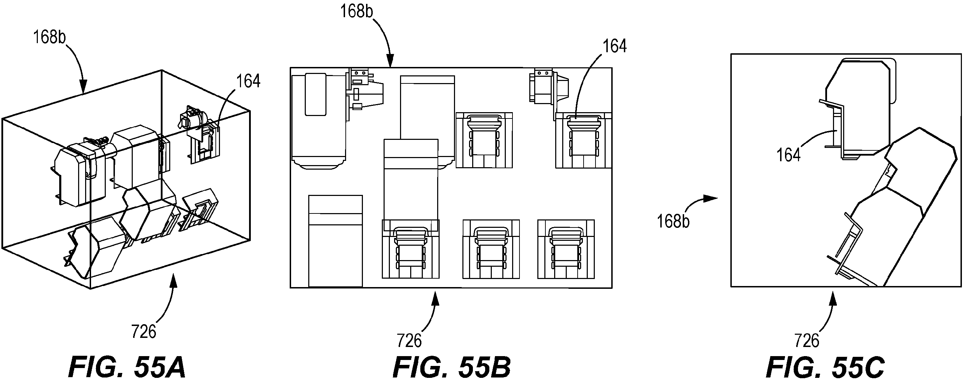

FIG. 55A is a perspective view of another interface cavity and a battery pack interface configuration for the portable charging station of FIG. 1A.
FIG. 55B is a front view of the interface cavity of FIG. 55A.
FIG. 55C is a side view of the interface cavity of FIG. 55A.

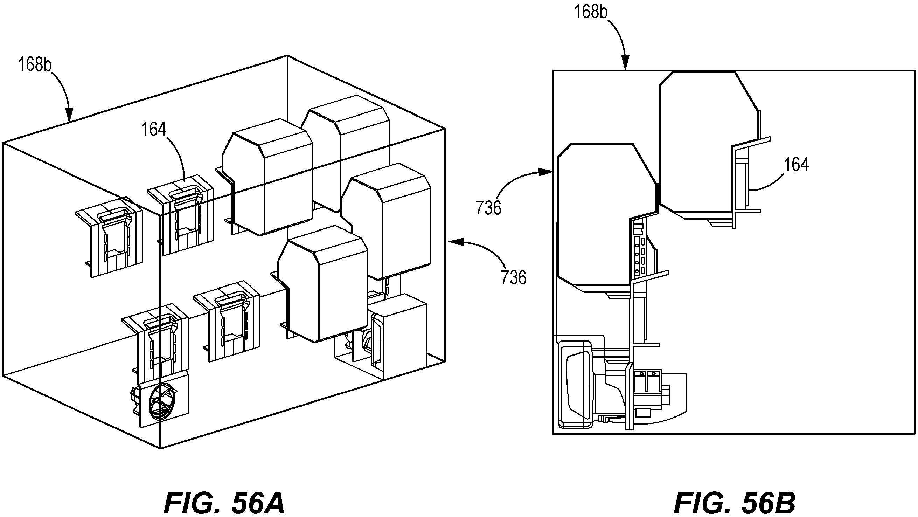

FIG. 56A is a perspective view of another interface cavity and a battery pack interface configuration for the portable charging station of FIG. 1A.
FIG. 56B is a side view of the interface cavity of FIG. 56A.

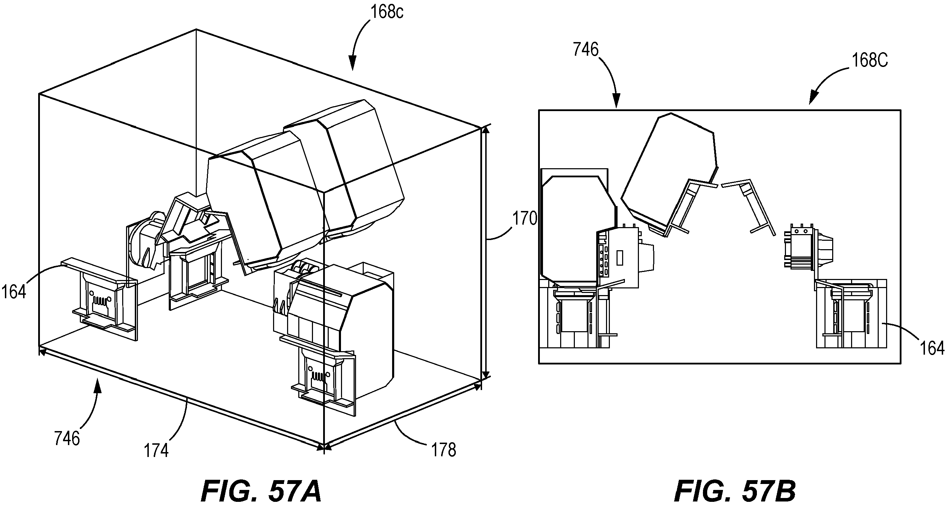

FIG. 57A is a perspective view of another interface cavity and a battery pack interface configuration for the portable charging station of FIG. 1A.
FIG. 57B is a front view of the interface cavity of FIG. 57A.

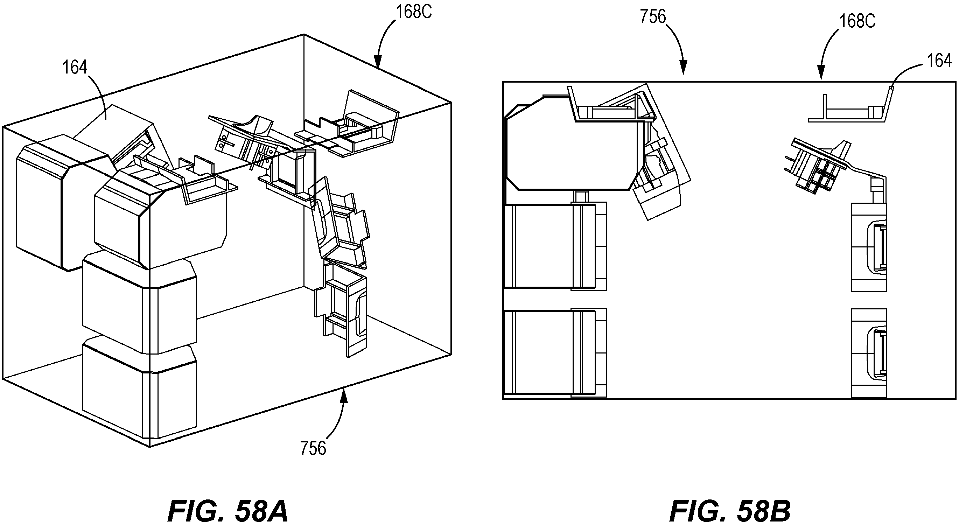

FIG. 58A is a perspective view of another interface cavity and a battery pack interface configuration for the portable charging station of FIG. 1A.
FIG. 58B is a front view of the interface cavity of FIG. 58A.

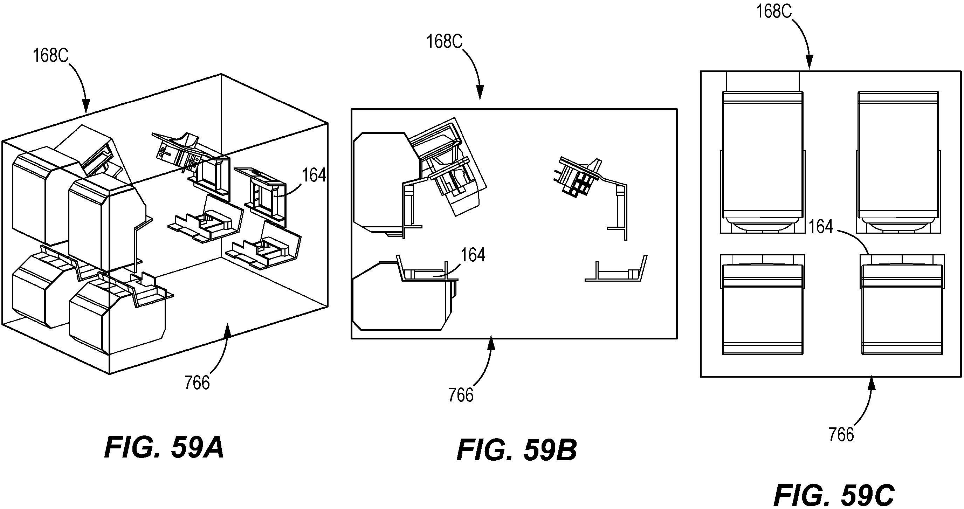

FIG. 59A is a perspective view of another interface cavity and a battery pack interface configuration for the portable charging station of FIG. 1A.
FIG. 59B is a front view of the interface cavity of FIG. 59A.
FIG. 59C is a side view of the interface cavity of FIG. 59A.

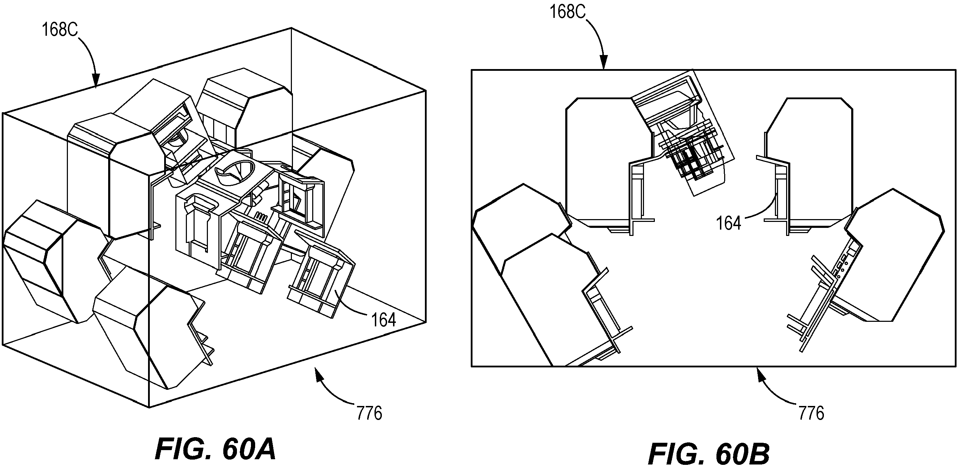

FIG. 60A is a perspective view of another interface cavity and a battery pack interface configuration for the portable charging station of FIG. 1A.
FIG. 60B is a front view of the interface cavity of FIG. 60A.

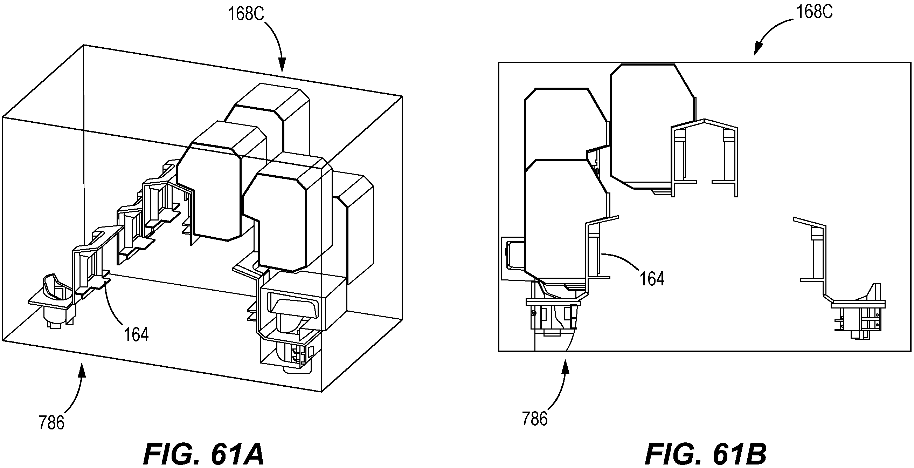

FIG. 61A is a perspective view of another interface cavity and a battery pack interface configuration for the portable charging station of FIG. 1A.
FIG. 61B is a front view of the interface cavity of FIG. 61A.

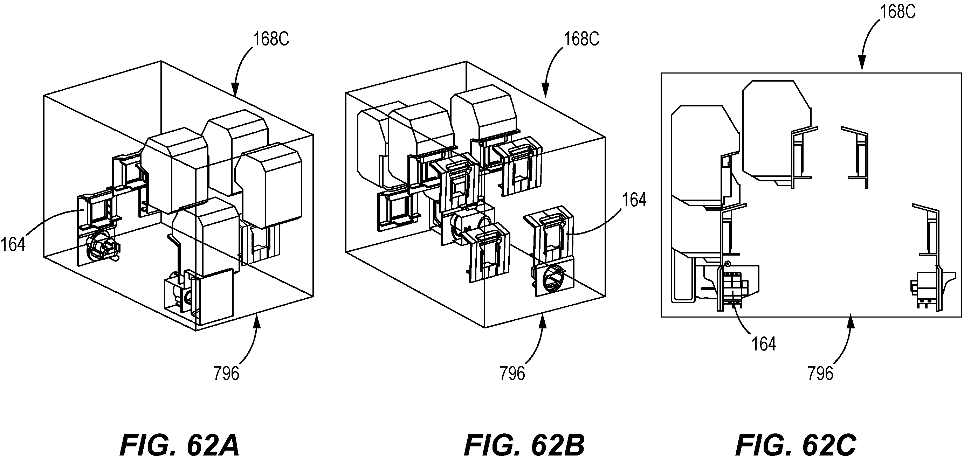

FIG. 62A is a perspective view of another interface cavity and a battery pack interface configuration for the portable charging station of FIG. 1A.
FIG. 62B is another perspective view of the interface cavity of FIG. 62A.
FIG. 62C is a front view of the interface cavity of FIG. 62A.

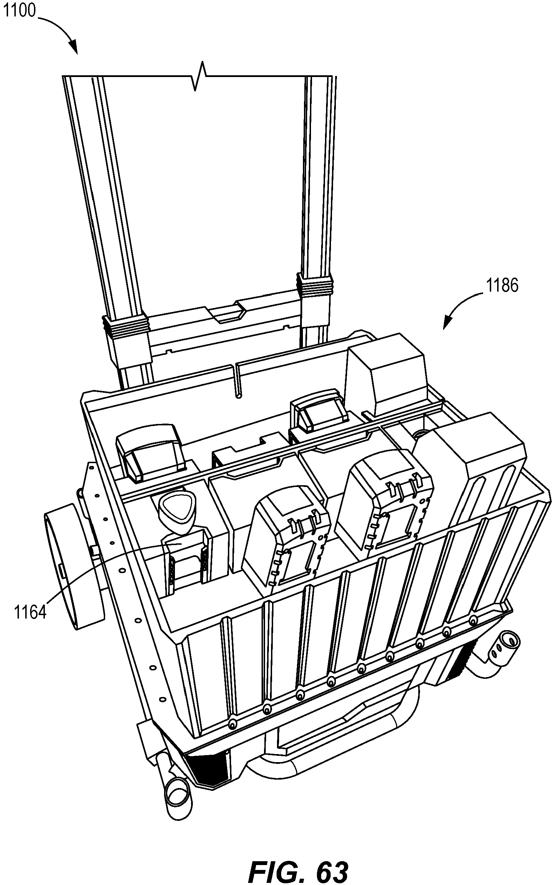

FIG. 63 is a perspective view of an embodiment of a battery pack interface configuration for the portable charging station of FIG. 3A.

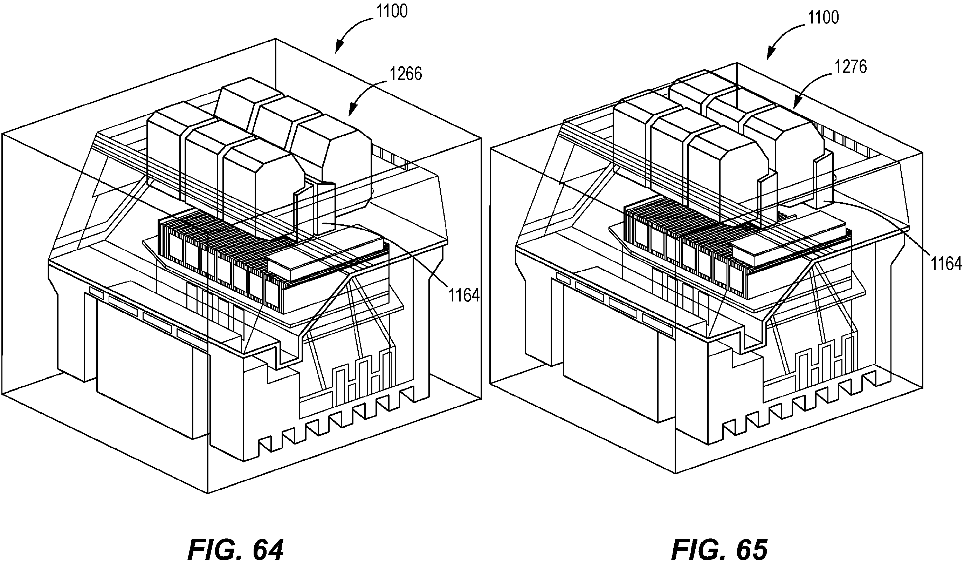

FIG. 64 is a perspective view of another embodiment of a battery pack interface configuration for the portable charging station of FIG. 3A.
FIG. 65 is perspective view of another embodiment of a battery pack interface configuration for the portable charging station of FIG. 3A.

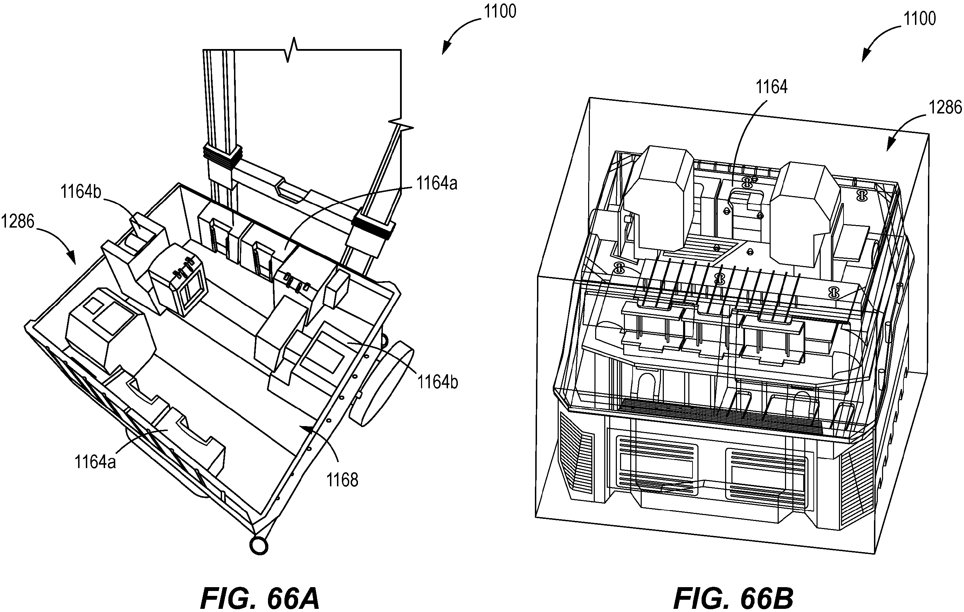

FIG. 66A is a perspective view of another embodiment of a battery pack interface configuration for the portable charging station of FIG. 3A.
FIG. 66B is another perspective view of the battery pack interface configuration of FIG. 66A.

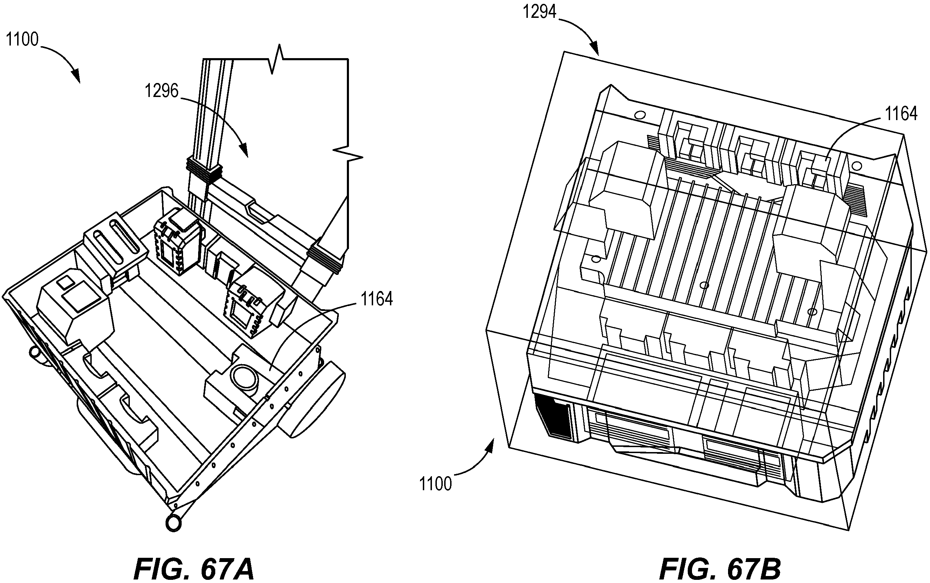

FIG. 67A is a perspective view of another embodiment of a battery pack interface configuration for the portable charging station of FIG. 3A.
FIG. 67B is another perspective view of the battery pack interface configuration of FIG. 67A.

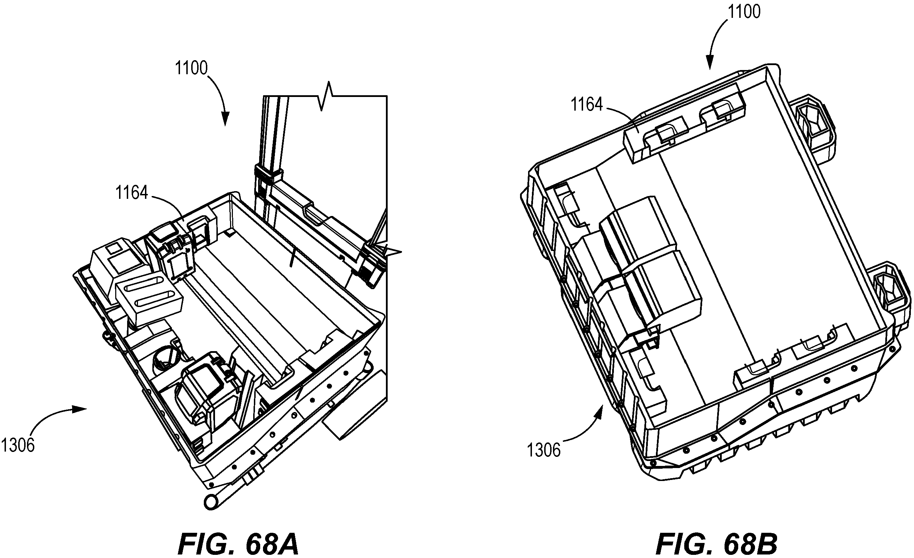

FIG. 68A is a perspective view of another embodiment of a battery pack interface configuration for the portable charging station of FIG. 3A.
FIG. 68B is another perspective view of the battery pack interface configuration of FIG. 68A.

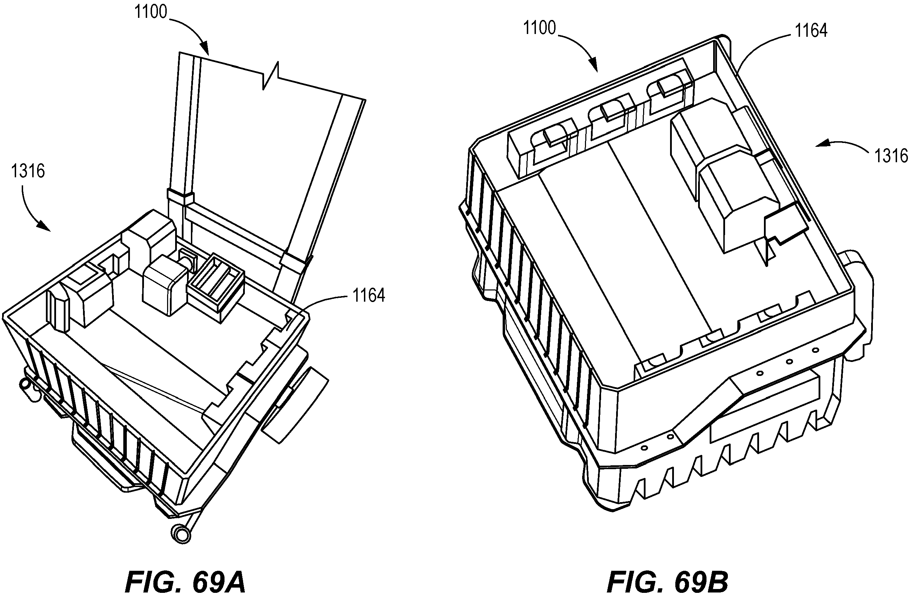

FIG. 69A is a perspective view of another embodiment of a battery pack interface configuration for the portable charging station of FIG. 3A.
FIG. 69B is another perspective view of the battery pack interface configuration of FIG. 69A.

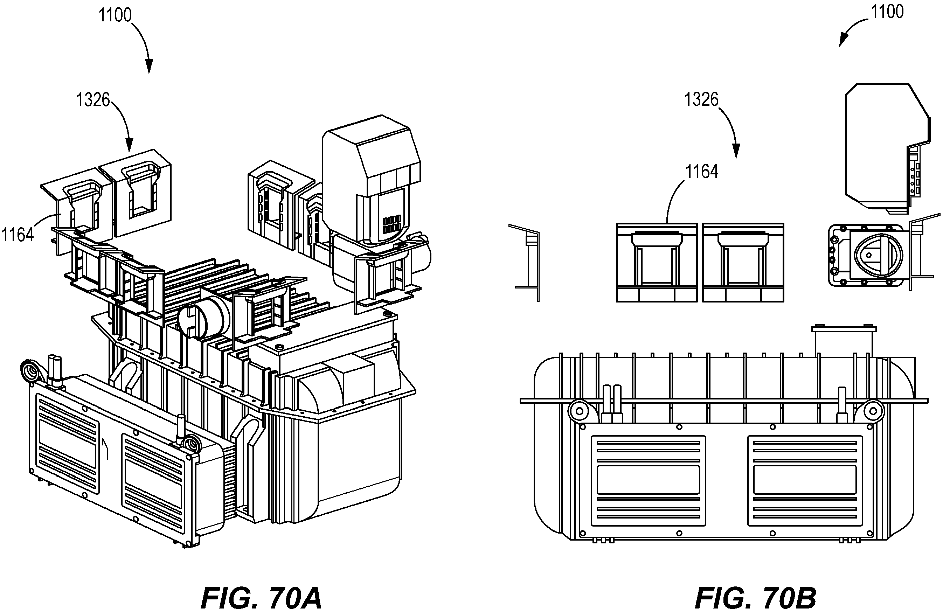

FIG. 70A is a perspective view of another embodiment of a battery pack interface configuration for the portable charging station of FIG. 3A.
FIG. 70B is a front view of the battery pack interface configuration of FIG. 70A.

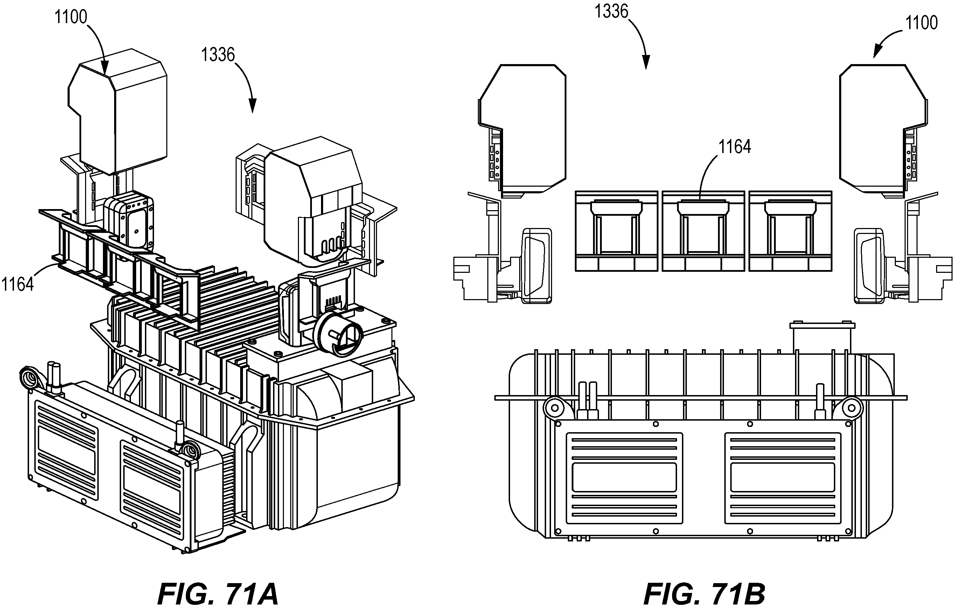

FIG. 71A is a perspective view of another embodiment of a battery pack interface configuration for the portable charging station of FIG. 3A.
FIG. 71B is a front view of the battery pack interface configuration of FIG. 71A.

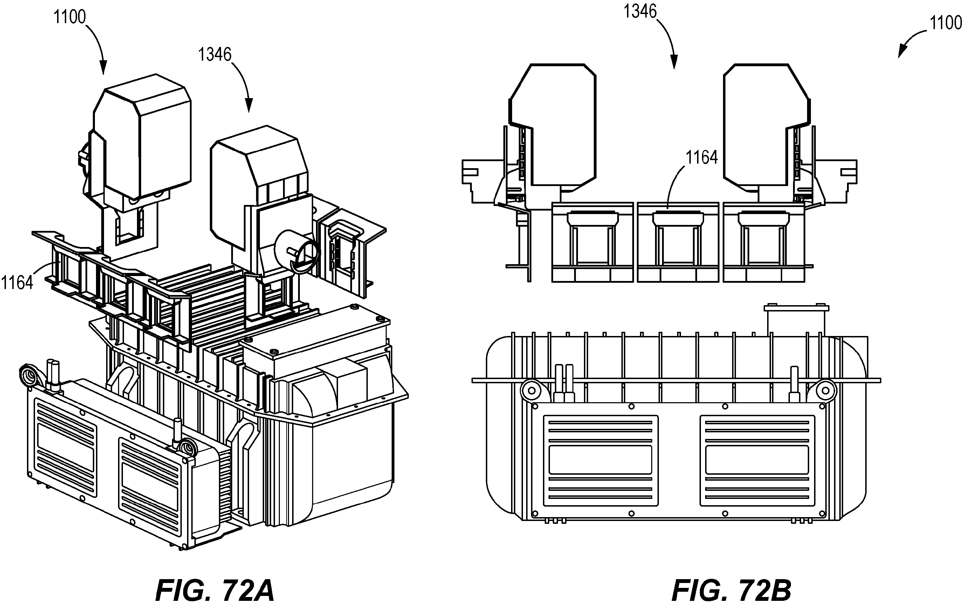

FIG. 72A is a perspective view of another embodiment of a battery pack interface configuration for the portable charging station of FIG. 3A.
FIG. 72B is a front view of the battery pack interface configuration of FIG. 72A.

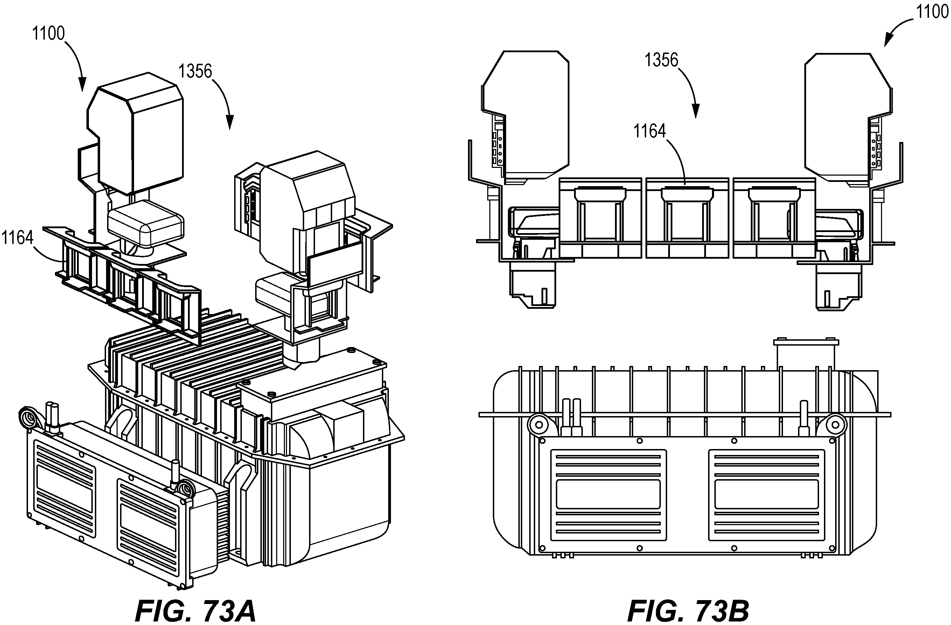

FIG. 73A is a perspective view of another embodiment of a battery pack interface configuration for the portable charging station of FIG. 3A.
FIG. 73B is a front view of the battery pack interface configuration of FIG. 73A.

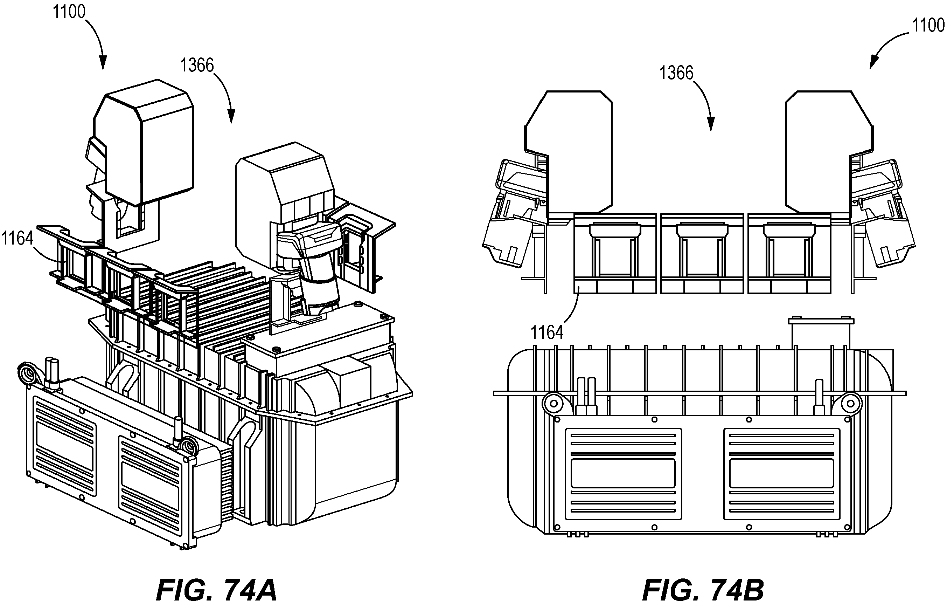

FIG. 74A is a perspective view of another embodiment of a battery pack interface configuration for the portable charging station of FIG. 3A.
FIG. 74B is a front view of the battery pack interface configuration of FIG. 74A.

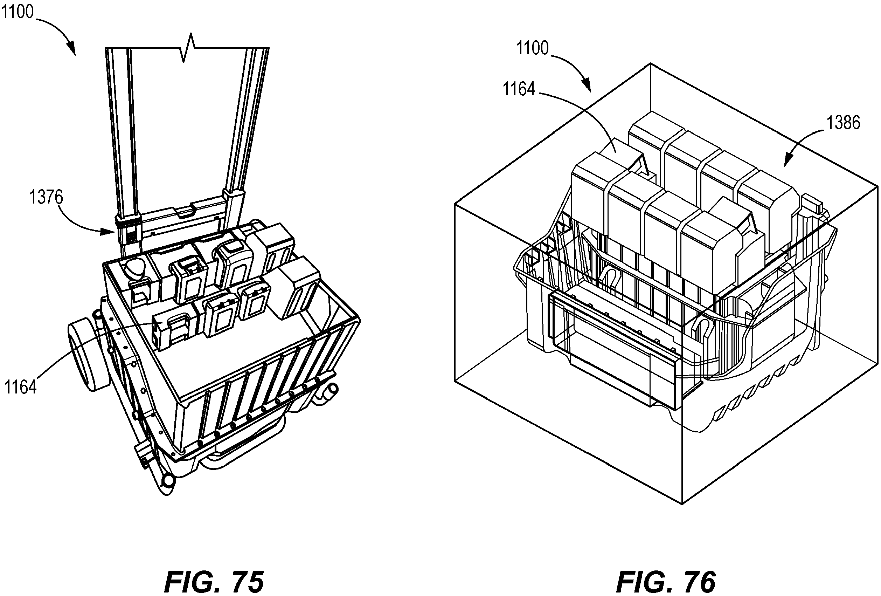

FIG. 75 is a perspective view of another embodiment of a battery pack interface configuration for the portable charging station of FIG. 3A.
FIG. 76 is a perspective view of another embodiment of a battery pack interface configuration for the portable charging station of FIG. 3A.

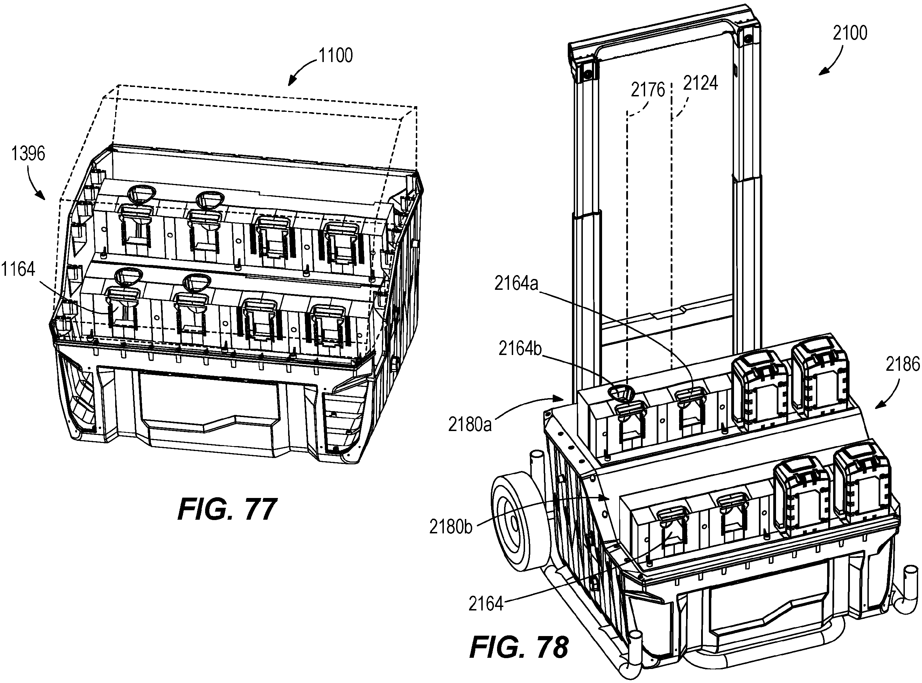

FIG. 77 is a perspective view of another embodiment of a battery pack interface configuration for the portable charging station of FIG. 3A.
FIG. 78 is a perspective view of an embodiment of a battery pack interface configuration for the portable charging station of FIG. 4.

### DETAILED DESCRIPTION

Before any embodiments of the disclosure are explained in detail, it is to be understood that the disclosure is not limited in its application to the details of construction and the arrangement of components set forth in the following description or illustrated in the drawings. The disclosure is capable of other embodiments and of being practiced or of being carried out in various ways. Also, it is to be understood that the phraseology and terminology used herein is for the purpose of description and should not be regarded as limiting.

With reference to FIGS. 1A-1C, an embodiment of a portable charging station or cabinet charger 100 is shown. The cabinet charger 100 includes a housing 104 and a door 106 pivotably coupled to the housing 104. The illustrated housing 104 is surrounded by a support structure 108. The illustrated support structure 108 is composed of a plurality of tubular sections 112. The housing 104 defines a first side 116 and a second side 120 opposite the first side 116. A handle 122 is coupled to the first side 116. In some embodiments, the handle 122 may be coupled to the support structure 108. The handle 122 defines a height axis 124. A plurality of wheels 128 is rotatably coupled to the first side 116. In some embodiments, the wheels 128 may instead be rotatably coupled to the support structure 108.

With continued reference to FIGS. 1A-1C, the door 106 is pivotably coupled to the second side 120 the housing 104. The illustrated cabinet charger 100 includes one door 106. In other embodiments, the cabinet charger 100 may include multiple doors 106. In some embodiments with two doors 106, the doors 106 may both be positioned on the second side 120. In other embodiments with two doors 106, the doors 106 may be positioned on lateral sides of the cabinet charger 100, with each door 106 positioned between the first and second sides 116, 120 (FIGS. 57A-62C). The door 106 is pivotable between an opened position and a closed position about hinges 132. The illustrated cabinet charger 100 includes two hinges 132. In other embodiments, the cabinet charger 100 may include fewer or more hinges 132. The door 106 is secured in the closed position by a latch 136. The illustrated latch 136 is positioned near an edge of the door 106 opposite the hinges 132. The illustrated cabinet charger 100 includes one latch 136. In other embodiments, the cabinet charger 100 may include more than one latch 136.

As illustrated in FIGS. 1D-1G, the housing 104 includes a first housing portion 140 and a second housing portion 144 coupled to the first housing portion 140. The first housing portion 140 may define a sealed internal cavity 148. As such, the first housing portion 140 is sealed to prevent debris (e.g., water, dirt, dust, etc.) from entering the sealed internal cavity 148. The first housing portion 140 supports a charging circuit 152. The charging circuit 152 includes a charger 156 and a core 160 electrically coupled to the charger 156. The illustrated core 160 is offset from the second housing portion 144 along the height axis 124. The illustrated charger 156 is positioned between the second housing portion 144 and the handle 122. In other embodiments, the charger 156 may be positioned near the core 160 and offset from the second housing portion 144 along the height axis 124.

With continued reference to FIGS. 1D-1G, the second housing portion 144 is offset from the first housing portion 140 along the height axis 124. The second housing portion 144 and the door 106 together define an interface cavity 168. The interface cavity 168 includes a plurality of battery pack interfaces 164 oriented in a first cabinet interface configuration 166. The battery pack interfaces 164 are configured to receive power tool battery packs 172. Each of the battery pack interfaces 164 defines an insertion axis 176. The illustrated insertion axes 176 extend transverse to the height axis 124. In some embodiments, the insertion axes 176 may be perpendicular to the height axis 124. In other embodiments, the insertion axes 176 may extend in a plurality of different directions. The illustrated battery pack interfaces 164 are arranged in two columns 180. Each illustrated column 180 includes three battery pack interfaces 164.

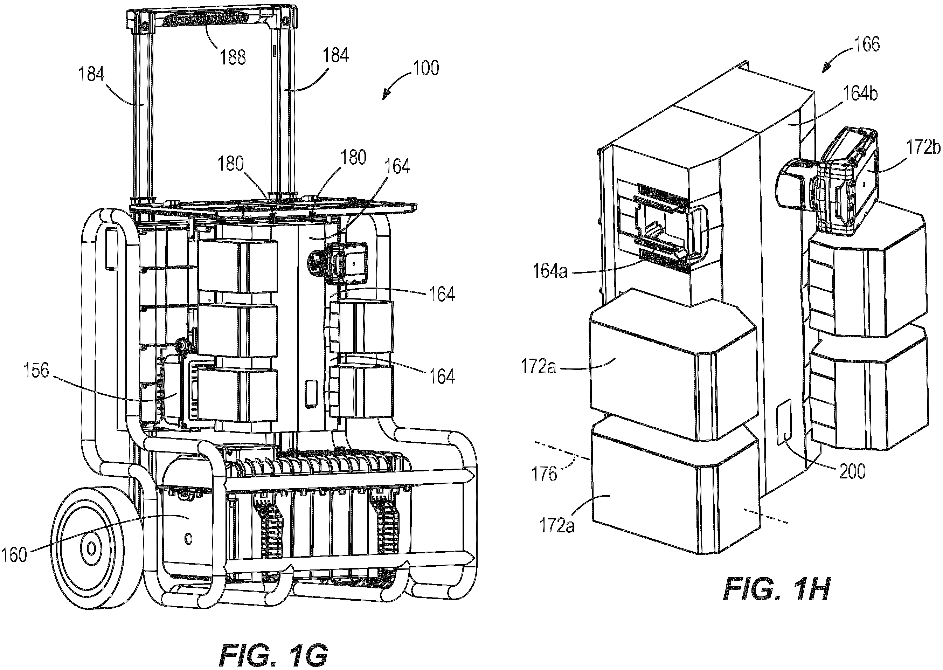

FIG. 1H illustrates the first cabinet interface configuration 166. The plurality of battery pack interfaces 164 includes a first battery pack interface 164a configured to receive a first battery pack 172a having a first voltage (e.g., 18V). The plurality of battery pack interfaces 164 further includes a second battery pack interface 164b configured to receive the first battery pack 172a and a second battery pack 172b having a second voltage different than the first voltage (e.g., 12V). The second battery pack interface 164b may be referred to as a combo port. The illustrated plurality of battery pack interfaces 164 includes five of the first battery pack interfaces 164a and one of the second battery pack interfaces 164b. In other embodiments, there may be fewer or more of the first and second battery pack interfaces 164a, 164b, respectively. The plurality of battery pack interfaces 164 may include a third battery pack interface configured to receive the second battery pack 172b. In other embodiments, the plurality of battery pack interfaces 164 may include a plurality of different battery pack interfaces, each configured to receive a battery pack having a different voltage. The cabinet charger 100 further includes a charging port 200 configured to receive a charging cord (e.g., a USB cable). The illustrated charging port 200 is positioned between adjacent battery pack interfaces 164 in a direction transverse to the height axis 124.

FIG. 1I illustrates a second cabinet interface configuration 186 of the cabinet charger 100. The battery pack interfaces 164 are arranged in two columns 180, with four battery pack interfaces 164 in each column 180. In other embodiments, the columns 180 may include fewer or more battery pack interfaces 164. The illustrated columns 180 extend in directions extending along each other. In some embodiments, the columns 180 may extend in parallel directions. In other embodiments, the columns 180 may extend in intersecting directions.

With reference to FIGS. 1G, the handle 122 is a telescopic handle and includes two poles 184 and a grip portion 188 extending therebetween. The grip portion 188 extends in a direction oriented transversely relative to the height axis 124. The grip portion 188 may be made of a gripping material (e.g., rubber).

FIG. 1J illustrates the charger 156 of the charging circuit 152. The charger 156 includes a circuit board and an inverter. The charger 156 is configured to receive AC power from a power source (e.g., an external power source via a charging cord). The charger 156 is then configured to convert the AC power to DC power (e.g., via the inverter), and then supply the DC power to the core 160 to charge the core 160. The illustrated charger 156 further includes a cooling fan 192 and a heatsink 196. The cooling fan 192 and the heatsink 196 are configured to dissipate heat generated by the charger 156 during operation. The cabinet charger 100 further includes a plurality of vents to allow cooling air to travel through the housing 104 to assist in dissipating heat generated by the charger 156 and other components of the cabinet charger 100 (e.g., the battery pack interfaces 164, the core 160, etc.).

FIG. 1K illustrates the core 160 of the charging circuit 152. The core 160 is configured to receive DC power from the charger 156 and store the power. The core 160 is electrically connected to the battery pack interfaces 164. The core 160 is further configured to supply the DC power to the battery pack interfaces 164 to charge the battery packs 172. The core 160 is sized to store sufficient power, such that a user may transport the cabinet charger 100 to a location (e.g., a worksite) and charge the battery packs 172 during a period of time (e.g., a work day).

FIG. 1L illustrates the door 106 in the opened position. The door 106 includes gaskets 204, which are configured to create a seal with the second housing portion 144. The gaskets 204 may be received in respective recesses in the door 106. The illustrated door 106 includes two gaskets 204. In other embodiments, the door 106 may include fewer or more gaskets 204. In yet other embodiments, the gaskets 204 may be positioned in the second housing portion 144 instead of the door 106.

FIGS. 1M and 1N illustrate the latch 136 and a locking system 208 of the cabinet charger 100. The illustrated latch 136 includes a lever 212, an engaging portion 216 (e.g., a metal loop), and a receiving portion 220. The receiving portion 220 is formed as a recess in the door 106. The lever 212 is pivotable relative to the second housing portion 144 between a secured position and an unsecured position. The engaging portion 216 is pivotably coupled to the second housing portion 144 between an engaged position in which the engaging portion 216 is received in the receiving portion 220 and a disengaged position in which the engaging portion 216 is not received in the receiving portion 220. The latch 136 is in a latched position when the engaging portion 216 is in the engaged position, and the lever 212 is in the secured position. The latch 136 is in an unlatched position when the lever 212 is in the unsecured position. The locking system 208 includes two locking apertures 224 extending through the door 106 and the second housing portion 144, respectively. The locking system 208 further includes a lock 228 configured to be received in the locking apertures 224. In some embodiments, the locking apertures 224 may receive a chain 232 (e.g., a metal chain, a cord, etc.). In these embodiments, the lock 228 may be removably coupled to the chain 232. The illustrated locking system 208 is positioned on the same side of the door 106 as the latch 136. In other embodiments, the locking system 208 may be positioned on a different side of the door 106 as the latch 136.

With reference to FIG. 1N, the housing 104 includes a stackable surface 236 on a top side 240 of the housing 104. The top side 240 is the side of the housing 104 opposite the wheels 128. The stackable surface 236 includes a plurality of stacking interfaces 244. The stacking interfaces 244 are configured to support components 248 (e.g., toolboxes, radios, shelves, etc.), which are securably coupled to the stacking interfaces 244. In some embodiments, the stacking interfaces 244 may be referred to as non-powered power tool battery pack interfaces. In these embodiments, the stacking interfaces 244 are shaped the same as the battery pack interfaces 164 to slidably receive the components 248. However, the stacking interfaces 244 do not receive power. In other embodiments, the stacking interfaces 244 may be shaped to support a different connection (e.g., bayonet connection, etc.).

During operation, the power cord is plugged into an external power source (e.g., a wall plug providing mains electricity). The power cord supplies AC power to the charger 156, which converts the AC power to DC power (e.g., via the inverter) and then supplies the DC power to the core 160 to charge the core 160. With the core 160 sufficiently charged, the power cord may be removed from the external power source. The cabinet charger 100 may then be moved to the work site (e.g., rolled via the wheels 128). The lock 228 may be removed from the locking apertures 224 and the latch 136 may be moved to the unlatched position. The door 106 may then be pivoted from the closed position to the opened position. Battery packs 172 may be secured to the battery pack interfaces 164 to charge the battery packs 172. The door 106 may then be pivoted to the closed position, the latch 136 may be moved to the latched position, and the lock 228 may be received in the locking apertures 224. After a period of time, the battery packs 172 will be charged. The lock 228 may be removed, the latch 126 may be moved to the unlatched position, and the door 106 may be moved to the opened position to access the charged battery packs 172. Components 248 may be removably coupled to the stackable surface 236 during any time.

FIGS. 2A-2E illustrate different embodiments of the second battery pack interface 164b. The second battery pack interfaces 164b each include a first port 252 and a second port 256. With reference to FIG. 2A, the first port 252 is configured to slidably receive the first battery pack 172a along a first insertion axis 176a. The second port 256 is configured to receive the second battery pack 172b along a second insertion axis 176b. In some embodiments, the first insertion axis 176a extends along the second insertion axis 176b. In other embodiments, the first insertion axis 176a intersects the second insertion axis 176b. The first and second battery packs 172a, 172b are illustrated as being transposed and received on or in the respective ports 252, 256. However, the illustrated second battery pack interfaces 164b may only receive one battery pack 172a, 172b at a time.

FIGS. 3A-3D illustrate another embodiment of a portable charging station or chest charger 1100, with terms similar to FIGS. 1A-2E labeled similarly plus a value of one thousand. The battery charger 1100 may include any combination of features, dimensions, or ranges of dimensions from the preceding or subsequent embodiments, but only features of the chest charger 1100 not yet discussed with respect to the previous embodiment are detailed below.

The chest charger 1100 includes the door 1106 pivotably coupled to the housing 1104. The door 1106 and the second housing portion 1144 define the interface cavity 1168. The interface cavity 1168 includes the plurality of battery pack interfaces 1164 oriented in a first chest interface configuration 1166. The illustrated battery pack interfaces 1164 are arranged in two rows 1180. The illustrated rows 1180 each include four battery pack interfaces 1164. The insertion axis 1176 of each of the battery pack interfaces 1164 extends along the height axis 1124. The insertion axes 1176 may be parallel with the height axis 1124. The insertion axes 1176 intersect the door 1106 with the door 1106 in the closed position.

The door 1106 includes the stackable surface on a top side 1240. The top side 1240 of the door 1106 is opposite the housing 1104 when the door 1106 is in the closed position.

The second housing portion 1144 includes an edge 1242 opposite the first housing portion 1140. The edge 1242 surrounds the cavity 1168. The illustrated edge 1242 extends around a periphery of the second housing portion 1144. The edge 1242 may also extend along other portions of the second housing portion 1144. The illustrated edge 1242 is configured to contact the door 1106 with the door 1106 in the closed position. An edge plane is defined as coincident with the edge 1242. The edge plane extends uninterrupted over the cavity 1168. Said another way, the edge plane does not extend through any component (e.g., the battery pack interfaces 1164, the battery packs 1172, etc.) within the internal cavity 1168.

With reference to FIGS. 3A and 3B, the illustrated chest charger 1100 includes two latches 1136. The latches 1136 are positioned on the second side 1120 of the housing 1104. The hinges 132 are positioned opposite the latches 1136 on the first side 1116 of the housing 1104.

With reference to FIGS. 3C and 3D, the core 1160 is positioned between the charger 1156 and the handle 1122. The charger 1156 and the core 1160 are positioned in the sealed internal cavity 1148 of the first housing portion 1140. The charger 1156 and the core 1160 are offset from the battery pack interfaces 1164 along the height axis 1124.

FIG. 4 illustrates another embodiment of a portable charging station or wheelbarrow charger 2100, with terms similar to FIGS. 1A-2E labeled similarly plus a value of two thousand. The wheelbarrow charger 2100 may include any combination of features, dimensions, or ranges of dimensions from the preceding or subsequent embodiments, but only features of the wheelbarrow charger 2100 not yet discussed with respect to the previous embodiments are detailed below.

The wheelbarrow charger 2100 includes an interface wall 2260 coupled to a side of the housing 2104 opposite the wheels 2128. The interface wall 2260 is disposed above the housing 2104 along the height axis 2124. The interface wall 2260 defines a stepped surface 2264. The stepped surface 2264 includes a battery receiving trench 2268. The illustrated plurality of battery pack interfaces 2164 are arranged in two rows 2180, with four battery pack interfaces 2164 in each row 2180. One of the rows 2180 is positioned in the battery receiving trench 2268. The battery packs (not shown) are configured to be received in the battery receiving trench 2268. The insertion axis 2176 of each battery pack interface 2164 extends along the height axis 2124. In other embodiments, one or more of the battery pack interfaces 2164 may be oriented obliquely relative to the height axis 2124. The stepped surface 2264 may further include the stackable surface.

The housing 2104 and the interface wall 2260 define the sealed internal cavity 2148. The charger 2156 and the core 2160 are positioned within the sealed internal cavity 2148. The wheelbarrow charger 2100 further includes a circuit board 2272 positioned in the sealed internal cavity 2148. The circuit board 2272 is offset from the core 2160 along the height axis 2124.

FIGS. 5-8 illustrate a fourth, fifth, sixth, and seventh portable charging station 3100, 4100, 5100, 6100, respectively. The portable charging stations 3100, 4100, 5100, 6100 may include any combination of features, dimensions, or ranges of dimensions from the preceding or subsequent embodiments.

FIGS. 9-43 illustrate additional embodiments of the configuration of battery pack interfaces 164 in the cabinet charger 100. FIGS. 9-43 illustrate third, fourth, fifth, sixth, seventh, eighth, ninth, tenth, eleventh, twelfth, thirteenth, fourteenth, fifteenth, sixteenth, seventeenth, eighteenth, nineteenth, twentieth, twenty-first, twenty-second, twenty-third, twenty-fourth, twenty-fifth, twenty-sixth, twenty-seventh, twenty-eighth, twenty-ninth, thirtieth, thirty-first, thirty-second, thirty-third, thirty-fourth, thirty-fifth, thirty-sixth, and thirty-seventh cabinet interface configurations 266, 276, 286, 296, 306, 316, 326, 336, 346, 356, 366, 376, 386, 396, 406, 416, 426, 436, 446, 456, 466, 476, 486, 496, 506, 516, 526, 536, 546, 556, 566, 576, 586, 596, 606, respectively.

As illustrated in FIGS 17A and 17B, the eleventh cabinet interface configuration 346 includes a first row 182a and a second row 182b of battery pack interfaces 164. The second row 182b is positioned between the first row 182a and the first housing portion 140. The illustrated rows 182a, 182b each include four battery pack interfaces 164. The illustrated first row 182a includes two first battery pack interfaces 164a and two second battery pack interfaces 164b. The first battery pack interfaces 164a are positioned between the second battery pack interfaces 164b. The first and second insertion axes 176a, 176b of the second battery pack interfaces 164b extend obliquely relative to the height axis 124. Every insertion axis 176 of the battery pack interfaces 164 extends obliquely to the height axis 124.

The sixteenth cabinet interface configuration 396 of FIGS. 22A and 22B is similar to the eleventh cabinet interface configuration 346 but includes different second battery pack interfaces 164b. The first insertion axes 176a extend along the height axis 124 and the second insertion axes 176b extend obliquely relative to the first insertion axes 176a.

The twenty-first cabinet interface configuration 446 of FIGS. 27A and 27B is also similar to the eleventh cabinet interface configuration 346 but includes different second battery pack interfaces 164b. The first insertion axes 176a extend along the height axis 124 and the second insertion axes 176b extend obliquely relative to the first insertion axes 176a. The illustrated second insertion axes 176b are perpendicular to the respective first insertion axes 176a.

As illustrated in FIGS. 30A-30C, the twenty-fourth cabinet interface configuration 476 includes battery pack interfaces 164 oriented in three planes. A first plane is defined by two first battery pack interfaces 164a. The first plane extends between the first and second sides 116, 120 of the housing 104. Second and third planes are defined by respective second battery pack interfaces 164b. The first, second and third planes extend along the height axis 124. The second and third planes are oriented transverse to the first plane, respectively. The second and third planes are transversely oriented relative to each other. Two first battery pack interfaces 164a and one second battery pack interface 164b are oriented in each of the second and third planes.

FIGS. 44A-77 illustrate additional embodiments of the interface cavity 168 and additional embodiments of the configuration of battery pack interfaces 164 in the cabinet charger 100. FIGS. 44A-49C illustrate a first interface cavity 168a. FIGS. 50A-56B illustrate a second interface cavity 168b. FIGS. 57A-62C illustrate a third interface cavity 168c. The first, second, and third interface cavities 168a, 168b, 168c each define a first dimension 170 extending along the height axis 124, a second dimension 174 extending perpendicular to the first dimension 170, and a third dimension 178 extending perpendicular to the first and second dimensions 170, 174.

FIGS. 44A-49C illustrate the first interface cavity 168a and thirty-eighth, thirty-ninth, fortieth, forty-first, forty-second, and fourth-third cabinet interface configurations 616, 626, 636, 646, 656, 666, respectively. With reference to FIG. 44A, the first dimension 170 is greater than the second and third dimensions 174, 178. The door is configured to extend along the first and second dimensions 170, 174 to enclose the first interface cavity 168a.

FIGS. 50A-56B illustrate a second interface cavity 168b and forty-fourth, forty-fifth, forty-sixth, forty-seventh, forty-eighth, forty-ninth, and fiftieth cabinet interface configurations 676, 686, 696, 706, 716, 726, 736, respectively. With reference to FIG. 50A, the second dimension 174 is greater than the first and third dimensions 170, 178. The door is configured to extend along the first and second dimensions 170, 174 to enclose the second interface cavity 168b.

FIGS. 57A-62C illustrate a third interface cavity 168c and fifty-first, fifty-second, fifty-third, fifty-fourth, fifty-fifth, and fifty-sixth cabinet interface configurations 746, 756, 766, 776, 786, 796, respectively. With reference to FIG. 57A, the second dimension 174 is greater than the first and third dimensions 170, 178. The third interface cavity 168c is configured to be enclosed by two doors. Each of the doors is configured to extend along the first and third dimensions 170, 178.

FIGS. 63-77 illustrate additional embodiments of the configuration of battery pack interfaces 1164 in the chest charger 1100. FIGS. 63-77 illustrate a second, third, fourth, fifth, sixth, seventh, eighth, ninth, tenth, eleventh, twelfth, thirteenth, fourteenth, fifteenth, and sixteenth chest interface configurations 1186, 1266, 1276, 1286, 1296, 1306, 1316, 1326, 1336(10), 1346, 1356, 1366, 1376, 1386, 1396, respectively.

As illustrated in FIGS. 66A and 66B, the battery pack interfaces 1164 are positioned around a perimeter of the interface cavity 1168. The fifth chest interface configuration 1286 includes three first battery pack interfaces 1164a near the first side 1116 and the second side 1120 of the housing 1104, respectively. The fifth chest interface configuration 1286 further includes two second battery pack interfaces 1164b, one second battery pack interface 1164b near each of the remaining two sides of the interface cavity 1168.

FIG. 78 illustrates a second wheelbarrow interface configuration 2186 for use in the wheelbarrow charger 2100. The second wheelbarrow interface configuration 2186 includes a first row 2180a and a second row 2180b. The first row 2180a is offset from the second row 2180b along the height axis 2124. The first row 2180a includes two second battery pack interfaces 2164b and two first battery pack interfaces 2164a therebetween. The second row 2180b includes four first battery pack interfaces 2164a. Every insertion axis 2176 of the battery pack interfaces 2164a, 2164b extends in direction along the height axis 2124.

Although the disclosure has been described in detail with reference to certain preferred embodiments, variations and modifications exist within the scope and spirit of one or more independent aspects of the disclosure as illustrated and/or described. When used in this specification and claims, the terms "comprises" and "comprising" and variations thereof mean that the specified features, steps or integers are included. The terms are not to be interpreted to exclude the presence of other features, steps or components.

### REPRESENTATIVE FEATURES

Representative features are set out in the following clauses, which stand alone or may be combined, in any combination, with one or more features disclosed in the text and/or drawings of the specification.
1. A portable charging station comprising:
   a housing;
   a handle coupled to the housing and extending along a height axis of the portable charging station;
   a charging circuit disposed in the housing, the charging circuit including a rechargeable battery;
   a power tool battery pack interface electrically connected to the charging circuit, the power tool battery pack interface defining an insertion axis, the insertion axis extending along the height axis; and
   a door including a hinge connected to the housing, the door pivotable between an open position and a closed position, the door intersected by the insertion axis in the closed position.
2. The portable charging station of clause 1, wherein the housing includes a cavity defined therein, the cavity surrounded by an edge of the housing, a plane coincident with the edge extends uninterrupted over the cavity.
3. The portable charging station of clause 1, wherein
   the power tool battery pack interface is one of a plurality of power tool battery pack interfaces arranged in at least two rows, and
   each of the plurality of power tool battery pack interfaces is electrically connected to the charging circuit and includes a respective insertion axis, each insertion axis extending along the height axis.
4. The portable charging station of clause 1, wherein
   the power tool battery pack interface includes a first port configured to receive a first power tool battery pack and a second port configured to receive a second power tool battery pack,
   the first port is configured to deliver power having a different voltage than the second port, and
   the insertion axis corresponding to at least one of the first port and the second port.
5. The portable charging station of clause 1, further comprising a latch engageable with an edge of the door opposite the hinge to sealingly secure the door in the closed position.
6. The portable charging station of clause 1, wherein the door includes a plurality of non-powered power tool battery pack interfaces on a side of the door opposite the housing.
7. A portable charging station comprising:
   a housing;
   a handle coupled to the housing and extending along a height axis of the portable charging station;
   a charging circuit disposed in the housing, the charging circuit including a rechargeable battery;
   a power tool battery pack interface electrically connected to the charging circuit; and
   a door including a hinge pivotably connecting the door to the housing about a pivot axis extending along the height axis, the door opposite the handle.
8. The portable charging station of clause 7, wherein
   the power tool battery pack interface is one of a plurality of power tool battery pack interfaces arranged in at least two columns, and
   each column includes a plurality of the power tool battery pack interfaces.
9. The portable charging station of clause 8, wherein
   the first column includes a first power tool battery pack interface defining a first insertion axis,
   the second column includes a second power tool battery pack interface defining a second insertion axis, and
   the first insertion axis is oblique relative to the second insertion axis.
10. The portable charging station of clause 7, wherein
   the power tool battery pack interface includes a first port configured to receive a first power tool battery pack and a second port configured to receive a second power tool battery pack, and
   the first port is configured to deliver power having a different voltage than the second port.
11. The portable charging station of clause 7, further comprising a plurality of doors opposite the handle, the plurality of doors including the door.
12. The portable charging station of clause 7, further comprising a latch engageable with an edge of the door opposite the hinge to sealingly secure the door to the housing.
13. The portable charging station of clause 12, wherein a portion of the door is configured to receive a lock therethrough to lock the door to the housing.
14. The portable charging station of clause 7, further comprising
   a plurality of wheels rotatably coupled to the housing, and
   wherein the door includes a plurality of non-powered power tool battery pack interfaces on a side of the door opposite the plurality of wheels.
15. The portable charging station of clause 7, further comprising a plurality of vents defined in the housing.
16. The portable charging station of clause 7, wherein the charging circuit further includes an inverter electrically connected to the rechargeable battery.
17. A portable charging station comprising:
   a housing at least partially defining a sealed internal cavity therein;
   a handle coupled to the housing and extending along a height axis of the portable charging station;
   a charging circuit disposed in the sealed internal cavity, the charging circuit including a rechargeable battery;
   an interface wall including a power tool battery pack interface, the interface wall cooperating with the housing to enclose the sealed internal cavity, the power tool battery pack interface electrically connected to the charging circuit; and
   a plurality of wheels rotatably coupled to the housing.
18. The portable charging station of clause 17, wherein the interface wall defines a stepped surface opposite the wheels.
19. The portable charging station of clause 17, wherein
   the power tool battery pack interface includes a first port configured to receive a first power tool battery pack and a second port configured to receive a second power tool battery pack, and
   the first port is configured to deliver power having a different voltage than the second port.
20. The portable charging station of clause 17, wherein the power tool battery pack interface is one of a plurality of power tool battery pack interfaces arranged in at least two rows, and wherein each of the plurality of power tool battery pack interfaces is electrically connected to the charging circuit.
21. The portable charging station of clause 20, wherein at least one of the rows cooperates with the stepped surface to define a battery receiving trench.

## Claims

1. A portable charging station comprising:
a housing;
a handle coupled to the housing and extending along a height axis of the portable charging station;
a charging circuit disposed in the housing, the charging circuit including a rechargeable battery;
a power tool battery pack interface electrically connected to the charging circuit, the power tool battery pack interface defining an insertion axis, the insertion axis extending along the height axis; and
a door including a hinge connected to the housing, the door pivotable between an open position and a closed position, the door intersected by the insertion axis in the closed position.

2. The portable charging station of claim 1, wherein the housing includes a cavity defined therein, the cavity surrounded by an edge of the housing, a plane coincident with the edge extends uninterrupted over the cavity.

3. The portable charging station of claim 1 or 2, wherein
the power tool battery pack interface is one of a plurality of power tool battery pack interfaces arranged in at least two rows, and
each of the plurality of power tool battery pack interfaces is electrically connected to the charging circuit and includes a respective insertion axis, each insertion axis extending along the height axis.

4. The portable charging station of claim 1, 2 or 3, wherein
the power tool battery pack interface includes a first port configured to receive a first power tool battery pack and a second port configured to receive a second power tool battery pack,
the first port is configured to deliver power having a different voltage than the second port, and
the insertion axis corresponding to at least one of the first port and the second port.

5. The portable charging station of any preceding claim, further comprising a latch engageable with an edge of the door opposite the hinge to sealingly secure the door in the closed position, and/or wherein the door includes a plurality of non-powered power tool battery pack interfaces on a side of the door opposite the housing.

6. A portable charging station comprising:
a housing;
a handle coupled to the housing and extending along a height axis of the portable charging station;
a charging circuit disposed in the housing, the charging circuit including a rechargeable battery;
a power tool battery pack interface electrically connected to the charging circuit; and
a door including a hinge pivotably connecting the door to the housing about a pivot axis extending along the height axis, the door opposite the handle.

7. The portable charging station of claim 6, wherein
the power tool battery pack interface is one of a plurality of power tool battery pack interfaces arranged in at least two columns, and
each column includes a plurality of the power tool battery pack interfaces.

8. The portable charging station of claim 7, wherein
the first column includes a first power tool battery pack interface defining a first insertion axis,
the second column includes a second power tool battery pack interface defining a second insertion axis, and
the first insertion axis is oblique relative to the second insertion axis.

9. The portable charging station of claim 6, 7 or 8, wherein:
the power tool battery pack interface includes a first port configured to receive a first power tool battery pack and a second port configured to receive a second power tool battery pack, and
the first port is configured to deliver power having a different voltage than the second port, and/or
further comprising a plurality of doors opposite the handle, the plurality of doors including the door, and/or
further comprising a latch engageable with an edge of the door opposite the hinge to sealingly secure the door to the housing, preferably wherein a portion of the door is configured to receive a lock therethrough to lock the door to the housing.

10. The portable charging station of any one of claims 6 to 9
further comprising a plurality of wheels rotatably coupled to the housing, and wherein the door includes a plurality of non-powered power tool battery pack interfaces on a side of the door opposite the plurality of wheels, and/or
further comprising a plurality of vents defined in the housing, and/or
wherein the charging circuit further includes an inverter electrically connected to the rechargeable battery.

11. A portable charging station comprising:
a housing at least partially defining a sealed internal cavity therein;
a handle coupled to the housing and extending along a height axis of the portable charging station;
a charging circuit disposed in the sealed internal cavity, the charging circuit including a rechargeable battery;
an interface wall including a power tool battery pack interface, the interface wall cooperating with the housing to enclose the sealed internal cavity, the power tool battery pack interface electrically connected to the charging circuit; and
a plurality of wheels rotatably coupled to the housing.

12. The portable charging station of claim 11, wherein the interface wall defines a stepped surface opposite the wheels.

13. The portable charging station of claim 11 or 12, wherein
the power tool battery pack interface includes a first port configured to receive a first power tool battery pack and a second port configured to receive a second power tool battery pack, and
the first port is configured to deliver power having a different voltage than the second port.

14. The portable charging station of claim 11, 12 or 13, wherein the power tool battery pack interface is one of a plurality of power tool battery pack interfaces arranged in at least two rows, and wherein each of the plurality of power tool battery pack interfaces is electrically connected to the charging circuit, preferably wherein at least one of the rows cooperates with the stepped surface to define a battery receiving trench.
